# EUROPEAN PATENT APPLICATION

(11) **EP 4 745 772 A1**
(43) Date of publication of application: **20.05.2026**
(21) Application number: 24853258.2
(22) Date of filing: 07.05.2024
(51) Int. Cl.: G06F 9/50

(54) **LOGIC TREE BUILDING METHOD, NETWORK NODE DEVICE, COMPUTING NODE DEVICE, AND SYSTEM**

(30) Priority: 14.08.2023 CN 202311021621
(71) Applicant: Huawei Technologies Co., Ltd., Shenzhen, Guangdong 518129 (CN)
(72) Inventor: XU, Jie, Shenzhen, Guangdong 518129 (CN); LIU, Shuo, Shenzhen, Guangdong 518129 (CN); WANG, Qiaoling, Shenzhen, Guangdong 518129 (CN); XIE, Shanggang, Shenzhen, Guangdong 518129 (CN); CHEN, Tianxiang, Shenzhen, Guangdong 518129 (CN); LING, Wenkai, Shenzhen, Guangdong 518129 (CN)
(74) Representative: Pfenning, Meinig & Partner mbB
(86) International application number: PCT/CN2024/091376
(87) International publication number: WO 2025/035842

(57) **Abstract**

This application relates to the field of computers, and provides a method, a network node device, a computing node device, and a system for building a logical tree. The method includes: A first network node device obtains a first tree building request initiated by a first computing node device in a plurality of computing node devices. The first network node device updates, based on the first tree building request, a value of a tree building request counter that is in a tree building information table and that corresponds to a first logical tree. The first network node device determines a tree building result based on the tree building request counter and a first threshold. According to the foregoing method, an edge-side computing node device initiates the tree building request, and includes, in the tree building request, structure information of a node on a branch that is of the logical tree and on which the edge-side computing node device is located; and the network node device counts a quantity of tree building requests that have been aggregated by a node that is in the logical tree and that corresponds to the network node device, to reduce impact of a failure of a single node and improve reliability of building the logical tree by a distributed computing cluster.

## Description

This application claims priority to Chinese Patent Application No. 202311021621.3, filed with the China National Intellectual Property Administration on August 14, 2023 and entitled "METHOD, NETWORK NODE DEVICE, COMPUTING NODE DEVICE, AND SYSTEM FOR BUILDING LOGICAL TREE", which is incorporated herein by reference in its entirety.

### TECHNICAL FIELD

This application relates to the field of distributed computing, and more specifically, to a method, a network node device, a computing node device, and a system for building a logical tree.

### BACKGROUND

As data and computing scales expand, a computing capability of a single computing node can no longer meet computing requirements of data processing, making distributed computing through collaboration among a plurality of computing nodes becomes a prevailing trend. After computing tasks are allocated to the plurality of computing nodes, the plurality of computing nodes need to communicate for their computing results (in other words, communication tasks). With the growth of a distributed computing cluster, the proportion of time for communication tasks gradually increases, eventually becoming a bottleneck that hampers the speed of the distributed computing.

In in-network computing (in-network computing, INC), a network node device in a distributed computing cluster responsible for packet forwarding performs specific computing on packet fields while performing packet forwarding, offloading partial computing tasks onto the network node device, and therefore alleviating the communication bottleneck in distributed computing. However, execution of in-network computing tasks requires a logical tree formed by a computing node device and a network node device, where the logical tree is used for aggregating data and broadcast computing result.

In conventional solutions, the construction of the logical tree is handled by a specific node, for example, an aggregation manager (aggregation manager, AM). The AM pre-builds the logical tree according to physical topology of a distributed computing cluster, and reserves corresponding resources. Before an in-network computing task starts, the AM allocates a subtree of the logical tree to the in-network computing task for in-network computing. However, the centralized pre-building of the logical tree by the specific node results in poor scalability and low resource utilization. More critically, it makes the entire cluster vulnerable to failure due to exceptions of a single node, causing poor reliability. Therefore, how to improve the reliability of building a logical tree by the distributed computing cluster becomes a technical problem to be urgently resolved.

### SUMMARY

Embodiments of this application provide a method, a network node device, a computing node device, and a system for building a logical tree, to enable an edge-side computing node device to initiate a tree building request and include, in the tree building request, structure information of a node on a branch that is of a logical tree and on which the computing node device is located; and enable a network node device to count a quantity of tree building requests that have been aggregated by a node that is in the logical tree and that corresponds to the network node device, so that each network node device only needs to process a tree building request forwarded by a device connected to the network node device, to avoid a failure of the entire logical tree that is caused by a failure of a single network node device, and improve reliability of building the logical tree by a distributed computing cluster.

According to a first aspect, a method for building a logical tree is provided. The method is applied to a first network node device in a distributed computing cluster, the distributed computing cluster includes a plurality of computing node devices and at least one network node device, the first network node device is one of the at least one network node device, and the method includes: The first network node device obtains a first tree building request initiated by a first computing node device in the plurality of computing node devices, where the first tree building request indicates a quantity of leaf nodes of each ancestor node in all ancestor nodes of a first leaf node in a first logical tree, the first logical tree is a logical tree that the first tree building request indicates the distributed computing cluster to build, and the first leaf node is a node that is in the first logical tree and that corresponds to the first computing node device. The first network node device updates, based on the first tree building request, a value of a tree building request counter that is in a tree building information table and that corresponds to the first logical tree, where the tree building request counter indicates a quantity of tree building requests that have been received by the first network node device and that are initiated by different computing node devices in the plurality of computing node devices. The first network node device determines a tree building result based on the tree building request counter and a first threshold, where the first threshold is a quantity of leaf nodes of an ancestor node that is of the first leaf node and that corresponds to the first network node device.

Optionally, the at least one network node device may include but is not limited to a switch or a router that has an in-network computing function, and the plurality of computing node devices may include but are not limited to a central processing unit (central processing unit, CPU), a graphics processing unit (graphics processing unit, GPU), or a neural processing unit (neural processing unit, NPU). The logical tree is a structure for in-network computing.

Optionally, leaf nodes in the logical tree that the tree building request indicates to build have a same depth.

According to the technical solution provided in this application, the edge-side computing node device initiates the tree building request, and includes, in the tree building request, structure information of a node on a branch that is of the logical tree and on which the node corresponding to the computing node device is located; and the network node device counts a quantity of tree building requests that have been aggregated by the node that is in the logical tree and that corresponds to the network node device, so that each network node device only needs to process a tree building request forwarded by a device connected to the network node device, to avoid a failure of the entire logical tree that is caused by a failure of a single network node device, and improve reliability of building the logical tree by the distributed computing cluster.

With reference to the first aspect, in some implementations of the first aspect, the first tree building request includes a network hop count field, and the network hop count field indicates a quantity of network node devices other than the first network node device on a forwarding path through which the first tree building request is forwarded from the first computing node device to the first network node device. The first tree building request further includes N leaf count fields, where N is a height of a root node in the first logical tree, and N is a positive integer. An n^{th} leaf count field in the N leaf count fields indicates a quantity of leaf nodes of an ancestor node that is of the first leaf node and whose height is n in the first logical tree, where n is a positive integer less than or equal to N.

According to the foregoing technical solution, the quantity of network node devices that the tree building request has passed through on the forwarding path is indicated in the tree building request, so that the network node device that obtains the tree building request can determine a layer that is of the node corresponding to the network node device and that is in the logical tree. The tree building request further indicates a quantity of leaf nodes belonging to an ancestor node at each layer on the branch on which the leaf node corresponding to the computing node device that initiates the request is located. In this way, the network node device can determine, based on any tree building request received by the network node device, the quantity of leaf nodes in the logical tree that belong to the node corresponding to the network node device.

With reference to the first aspect, in some implementations of the first aspect, the updating, based on the first tree building request, the value of the tree building request counter that is in the tree building information table and that corresponds to the first logical tree includes: when a value of the network hop count field in the first tree building request is equal to 0, increasing the value of the tree building request counter by 1; or when a value of the network hop count field in the first tree building request is equal to M, and M is a positive integer less than N, increasing the value of the tree building request counter by a value of an M^{th} leaf count field in the N leaf count fields in the first tree building request.

According to the foregoing technical solution, the network node device may determine a type of the tree building request based on a quantity of network hops. When the tree building request is directly obtained from a directly connected computing node device, it can be determined that the tree building request includes a tree building request of only one leaf node. When the tree building request is forwarded through another network node device, it can be determined that the tree building request is obtained by aggregating a tree building request from at least one leaf node. In this way, the network node device can count a quantity of received tree building requests from leaf nodes only based on a request sent by a device connected to the network node device, so that a tree building process is decoupled from topology, and a distributed tree building capability is provided.

With reference to the first aspect, in some implementations of the first aspect, the tree building information table further includes a network hop count that corresponds to the tree building request counter, and the network hop count indicates values of network hop count fields in the tree building requests indicated by the tree building request counter that have been received by the first network node device and that are initiated by the different computing node devices in the plurality of computing node devices. The updating, based on the first tree building request, the value of the tree building request counter in the tree building information table includes: updating the value of the tree building request counter when the value of the network hop count field in the first tree building request is equal to a value of the network hop count.

According to the foregoing technical solution, a network hop count in a received tree building request is recorded in the tree building information table, so that the network node device can determine whether different received tree building requests indicate that the network node device corresponds to a node at a same layer in the logical tree. When a plurality of tree building requests indicate nodes at different layers in the logical tree, quantities of tree building requests received by the nodes at the layers are counted separately, so that the nodes at the different layers in the built logical tree may be mapped to the same network node device.

With reference to the first aspect, in some implementations of the first aspect, the first threshold is equal to a value of a (K+1)^{th} leaf count field in the N leaf count fields in the first tree building request, where K is the value of the network hop count field in the first tree building request, and K is a positive integer less than N. The determining the tree building result based on the tree building request counter and the first tree building request includes: when a new value of the tree building request counter is equal to the first threshold, determining that building of the first logical tree has completed at the node corresponding to the first network node device; when a new value of the tree building request counter is greater than the first threshold, deleting tree building information corresponding to the first tree building request; or when a new value of the tree building request counter is less than the first threshold, waiting to receive another tree building request, to determine the tree building result.

According to the foregoing technical solution, the network node device can determine, based on information in the tree building request, the quantity of leaf nodes belonging to the node that is in the logical tree and that corresponds to the network node device, and compare the quantity with a quantity that is of received tree building requests from leaf nodes and that is counted by the tree building request counter, so that the network node device can determine, based on the quantity of leaf nodes, whether tree building requests of all child nodes have been collected, without knowing a quantity of child nodes directly connected to the network node device. In this way, each node in the logical tree only needs to perceive information about a leaf node belonging to the node, to complete tree building, so that a global-topology dependency problem of the tree building is resolved.

With reference to the first aspect, in some implementations of the first aspect, when the new value of the tree building request counter is equal to the first threshold, the method further includes: when the new value of the tree building request counter is equal to a second threshold, forwarding first tree building success information based on the path for forwarding the first tree building request to the first network node device, where the second threshold is a total quantity of leaf nodes in the first logical tree, and the second threshold is equal to a value of an N^{th} leaf count field in the N leaf count fields in the first tree building request; when the new value of the tree building request counter is greater than a second threshold, deleting the tree building information corresponding to the first tree building request; or when the new value of the tree building request counter is less than the first threshold, determining the tree building result based on a tree building result of a second network node device, where the second network node device is a network node device connected to the first network node device in the at least one network node device.

According to the foregoing technical solution, after the network node device collects the tree building requests of all the child nodes of the node that is in the logical tree and that corresponds to the network node device, the network node device compares the quantity of leaf nodes belonging to the node corresponding to the network node device with the total quantity that is of leaf nodes included in the logical tree and that is reflected in information in the tree building request, to determine whether the node corresponding to the network node device is the root node of the logical tree, and can continue to forward, for a non-root node, the tree building request to a next-hop network node device, so that in the tree building process, the network node device only needs to determine whether to forward the tree building request to the next-hop network node device, and does not need to know a complete structure of the logical tree, to avoid tree traversal in the tree building process. In this way, computing and space complexity are reduced, and scalability of the logical tree is improved.

With reference to the first aspect, in some implementations of the first aspect, the determining the tree building result based on the tree building result of the second network node device includes: increasing the value of the network hop count field in the first tree building request by 1, to update the first tree building request; sending an updated first tree building request to the second network node device; receiving second tree building success information sent by the second network node device; and forwarding the second tree building success information based on the path for forwarding the first tree building request to the first network node device.

According to the foregoing technical solution, when forwarding the tree building request to the next-hop network node device, the network node device only needs to update the network hop count in the tree building request, and does not need to update other information in the tree building request or initiate a new tree building request, to improve efficiency of forwarding the tree building request and improve the scalability of the logical tree.

With reference to the first aspect, in some implementations of the first aspect, after the receiving the second tree building success information sent by the second network node device, the method further includes: adding, to the tree building information table, a parent node mapping corresponding to the tree building request counter, where the parent node mapping indicates information about a port through which the first network node device is connected to the second network node device.

According to the foregoing technical solution, after receiving the tree building success information fed back by the next-hop network node device, the network node device records the port for connecting the network node device to a parent node, to establish a mapping relationship between a path in the logical tree and a physical connection path between devices. This ensures that the logical tree can be normally used during a task.

With reference to the first aspect, in some implementations of the first aspect, the tree building information table further includes a child node mapping corresponding to the tree building request counter, and the child node mapping indicates a port in at least one port of the first network node device for receiving the tree building requests indicated by the tree building request counter that have been received by the first network node device and that are initiated by the different computing node devices in the plurality of computing node devices. The updating, based on the first tree building request, the value of the tree building request counter in the tree building information table includes: determining a first port through which the first network node device receives the first tree building request; and when the child node mapping indicates that the tree building request has not been received through the first port, updating the value of the tree building request counter and the child node mapping.

According to the foregoing technical solution, in the tree building process, the network node device records a port through which a tree building request has been received, to determine whether a newly received tree building request has been counted. This avoids a counting error caused when a tree building request is repeatedly sent, and improves accuracy of building the logical tree.

With reference to the first aspect, in some implementations of the first aspect, the first tree building request further includes a task identifier field, the task identifier field indicates a first in-network computing task to be executed by using the first logical tree for in-network computing, the tree building information table further includes a task identifier corresponding to the tree building request counter, and the task identifier indicates values of task identifier fields in the tree building requests indicated by the tree building request counter that have been received by the first network node device and that are initiated by the different computing node devices in the plurality of computing node devices. The updating, based on the first tree building request, the value of the tree building request counter in the tree building information table includes: updating the value of the tree building request counter when a value of the task identifier field in the first tree building request is equal to a value of the task identifier.

According to the foregoing technical solution, a task identifier is carried in the tree building request, and the task identifier of the received tree building request is recorded in the tree building information table of the network node device, so that a mapping relationship between the logical tree and the in-network computing task can be established. In this way, the network node device can distinguish logical trees for different in-network computing tasks, to allow the network node device to build trees for a plurality of in-network computing tasks, and improve resource utilization.

With reference to the first aspect, in some implementations of the first aspect, the first tree building request is initiated by the first computing node device when the first in-network computing task starts, and the method further includes: After the first in-network computing task ends, the first network node device deletes tree building information that is in the tree building information table and that corresponds to the task identifier indicating the first in-network computing task.

According to the foregoing technical solution, the computing node device sends the tree building request when the in-network computing task starts, to start to build the tree, and releases, after the in-network computing task ends, a resource occupied by the logical tree, so that the logical tree is dynamically built with the task. In this way, there is no need to reserve a resource in advance or occupy a resource for a long period of time, to improve the resource utilization.

With reference to the first aspect, in some implementations of the first aspect, the obtaining the first tree building request initiated by the first computing node device in the plurality of computing node devices includes: receiving the first tree building request sent by the first computing node device, where the first network node device is connected to the first computing node device.

With reference to the first aspect, in some implementations of the first aspect, the obtaining the first tree building request initiated by the first computing node device in the plurality of computing node devices includes: receiving the first tree building request sent by a third network node device, where the third network node device is a network node device connected to the first network node device in the at least one network node device, and the first tree building request is received by the third network node device from the first computing node device or a network node device connected to the third network node device.

According to the foregoing technical solution, any network node device on the forwarding path of the tree building request can process the tree building request in a same manner, to improve an application scope of the method for building a logical tree.

With reference to the first aspect, in some implementations of the first aspect, the obtaining the first tree building request initiated by the first computing node device in the plurality of computing node devices includes: obtaining a first data packet, where the first data packet includes the first tree building request, and the first data packet is for transmission of data of an in-network computing task.

According to the foregoing technical solution, the tree building request is included in the normal data packet of the in-network computing task, so that in-band building of the logical tree can be implemented without additional packet transmission, to reduce signaling overheads for building the logical tree.

According to a second aspect, a method for building a logical tree is provided. The method is applied to a first computing node device in a distributed computing cluster, the distributed computing cluster includes a plurality of computing node devices and at least one network node device, the first computing node device is one of the plurality of computing node devices, and the method includes: The first computing node device sends a first tree building request to a fourth network node device, where the first tree building request indicates a quantity of leaf nodes of each ancestor node in all ancestor nodes of a first leaf node in a first logical tree, the first logical tree is a logical tree that the first tree building request indicates the distributed computing cluster to build, the first leaf node is a node that is in the first logical tree and that corresponds to the first computing node device, and the fourth network node device is a network node device connected to the first computing node device in the at least one network node device.

With reference to the second aspect, in some implementations of the second aspect, the first tree building request includes a network hop count field, the network hop count field indicates a quantity of network node devices that the first tree building request has passed through on a forwarding path, and a value of the network hop count field in the first tree building request sent by the first computing node device to the fourth network node device is 0. The first tree building request further includes N leaf count fields, where N is a height of a root node in the first logical tree, and N is a positive integer. An n^{th} leaf count field in the N leaf count fields indicates a quantity of leaf nodes of an ancestor node that is of the first leaf node and whose height is n in the first logical tree, where n is a positive integer less than or equal to N.

With reference to the second aspect, in some implementations of the second aspect, the first tree building request includes a task identifier field, and the task identifier field indicates a first in-network computing task to be executed by using the first logical tree for in-network computing.

With reference to the second aspect, in some implementations of the second aspect, the sending the first tree building request to the fourth network node device includes: sending the first tree building request to the fourth network node device when the first in-network computing task starts.

With reference to the second aspect, in some implementations of the second aspect, the sending the first tree building request to the fourth network node device includes: sending a first data packet to the fourth network node device, where the first data packet includes the first tree building request, and the first data packet is for transmission of data of an in-network computing task.

According to a third aspect, a network node device for building a logical tree is provided. The network node device is a first network node device in a distributed computing cluster, the distributed computing cluster includes a plurality of computing node devices and at least one network node device, the first network node device is one of the at least one network node device, and the network node device includes: an obtaining module, configured to obtain a first tree building request initiated by a first computing node device in the plurality of computing node devices, where the first tree building request indicates a quantity of leaf nodes of each ancestor node in all ancestor nodes of a first leaf node in a first logical tree, the first logical tree is a logical tree that the first tree building request indicates the distributed computing cluster to build, and the first leaf node is a node that is in the first logical tree and that corresponds to the first computing node device; an updating module, configured to update, based on the first tree building request, a value of a tree building request counter that is in a tree building information table and that corresponds to the first logical tree, where the tree building request counter indicates a quantity of tree building requests that have been received by the first network node device and that are initiated by different computing node devices in the plurality of computing node devices; and a determining module, configured to determine a tree building result based on the tree building request counter and a first threshold, where the first threshold is a quantity of leaf nodes of an ancestor node that is of the first leaf node and that corresponds to the first network node device.

With reference to the third aspect, in some implementations of the third aspect, the first tree building request includes a network hop count field, and the network hop count field indicates a quantity of network node devices other than the first network node device on a forwarding path through which the first tree building request is forwarded from the first computing node device to the first network node device. The first tree building request further includes N leaf count fields, where N is a height of a root node in the first logical tree, and N is a positive integer. An n^{th} leaf count field in the N leaf count fields indicates a quantity of leaf nodes of an ancestor node that is of the first leaf node and whose height is n in the first logical tree, where n is a positive integer less than or equal to N.

With reference to the third aspect, in some implementations of the third aspect, the updating module is configured to: when a value of the network hop count field in the first tree building request is equal to 0, increase the value of the tree building request counter by 1; or when a value of the network hop count field in the first tree building request is equal to M, and M is a positive integer less than N, increase the value of the tree building request counter by a value of an M^{th} leaf count field in the N leaf count fields in the first tree building request.

With reference to the third aspect, in some implementations of the third aspect, the tree building information table further includes a network hop count that corresponds to the tree building request counter, and the network hop count indicates values of network hop count fields in the tree building requests indicated by the tree building request counter that have been received by the first network node device and that are initiated by the different computing node devices in the plurality of computing node devices. The updating module is configured to: update the value of the tree building request counter when the value of the network hop count field in the first tree building request is equal to a value of the network hop count.

With reference to the third aspect, in some implementations of the third aspect, the first threshold is equal to a value of a (K+1)^{th} leaf count field in the N leaf count fields in the first tree building request, where K is the value of the network hop count field in the first tree building request, and K is a positive integer less than N. The determining module is configured to: when a new value of the tree building request counter is equal to the first threshold, determine that building of the first logical tree has completed at the node corresponding to the first network node device; when a new value of the tree building request counter is greater than the first threshold, delete tree building information corresponding to the first tree building request; or when a new value of the tree building request counter is less than the first threshold, wait to receive another tree building request, to determine the tree building result.

With reference to the third aspect, in some implementations of the third aspect, when the new value of the tree building request counter is equal to the first threshold, the determining module is further configured to: when the new value of the tree building request counter is equal to a second threshold, forward first tree building success information based on the path for forwarding the first tree building request to the first network node device, where the second threshold is a total quantity of leaf nodes in the first logical tree, and the second threshold is equal to a value of an N^{th} leaf count field in the N leaf count fields in the first tree building request; when the new value of the tree building request counter is greater than a second threshold, delete the tree building information corresponding to the first tree building request; or when the new value of the tree building request counter is less than the first threshold, determine the tree building result based on a tree building result of a second network node device, where the second network node device is a network node device connected to the first network node device in the at least one network node device.

With reference to the third aspect, in some implementations of the third aspect, the determining module is configured to: increase the value of the network hop count field in the first tree building request by 1, to update the first tree building request; send an updated first tree building request to the second network node device; receive second tree building success information sent by the second network node device; and forward the second tree building success information based on the path for forwarding the first tree building request to the first network node device.

With reference to the third aspect, in some implementations of the third aspect, after the second tree building success information sent by the second network node device is received, the determining module is further configured to add, to the tree building information table, a parent node mapping corresponding to the tree building request counter, where the parent node mapping indicates information about a port through which the first network node device is connected to the second network node device.

With reference to the third aspect, in some implementations of the third aspect, the tree building information table further includes a child node mapping corresponding to the tree building request counter, and the child node mapping indicates a port in at least one port of the first network node device for receiving the tree building requests indicated by the tree building request counter that have been received by the first network node device and that are initiated by the different computing node devices in the plurality of computing node devices. The updating module is configured to: determine a first port through which the first network node device receives the first tree building request; and when the child node mapping indicates that the tree building request has not been received through the first port, update the value of the tree building request counter and the child node mapping.

With reference to the third aspect, in some implementations of the third aspect, the first tree building request further includes a task identifier field, the task identifier field indicates a first in-network computing task to be executed by using the first logical tree for in-network computing, the tree building information table further includes a task identifier corresponding to the tree building request counter, and the task identifier indicates values of task identifier fields in the tree building requests indicated by the tree building request counter that have been received by the first network node device and that are initiated by the different computing node devices in the plurality of computing node devices. The updating module is configured to update the value of the tree building request counter when a value of the task identifier field in the first tree building request is equal to a value of the task identifier.

With reference to the third aspect, in some implementations of the third aspect, the first tree building request is initiated by the first computing node device when the first in-network computing task starts. The determining module is further configured to: after the first in-network computing task ends, delete, for the first network node device, tree building information that is in the tree building information table and that corresponds to the task identifier indicating the first in-network computing task.

With reference to the third aspect, in some implementations of the third aspect, the obtaining module is configured to receive the first tree building request sent by the first computing node device, where the first network node device is connected to the first computing node device.

With reference to the third aspect, in some implementations of the third aspect, the obtaining module is configured to receive the first tree building request sent by a third network node device, where the third network node device is a network node device connected to the first network node device in the at least one network node device, and the first tree building request is received by the third network node device from the first computing node device or a network node device connected to the third network node device.

With reference to the third aspect, in some implementations of the third aspect, the obtaining module is configured to obtain a first data packet, where the first data packet includes the first tree building request, and the first data packet is for transmission of data of an in-network computing task.

According to a fourth aspect, a computing node device for building a logical tree is provided. The computing node device is a first computing node device in a distributed computing cluster, the distributed computing cluster includes a plurality of computing node devices and at least one network node device, the first computing node device is one of the plurality of computing node devices, and the computing node device includes: a sending module, configured to send a first tree building request to a fourth network node device, where the first tree building request indicates a quantity of leaf nodes of each ancestor node in all ancestor nodes of a first leaf node in a first logical tree, the first logical tree is a logical tree that the first tree building request indicates the distributed computing cluster to build, the first leaf node is a node that is in the first logical tree and that corresponds to the first computing node device, and the fourth network node device is a network node device connected to the first computing node device in the at least one network node device.

With reference to the fourth aspect, in some implementations of the fourth aspect, the first tree building request includes a network hop count field, the network hop count field indicates a quantity of network node devices that the first tree building request has passed through on a forwarding path, and a value of the network hop count field in the first tree building request sent by the first computing node device to the fourth network node device is 0. The first tree building request further includes N leaf count fields, where N is a height of a root node in the first logical tree, and N is a positive integer. An n^{th} leaf count field in the N leaf count fields indicates a quantity of leaf nodes of an ancestor node that is of the first leaf node and whose height is n in the first logical tree, where n is a positive integer less than or equal to N.

With reference to the fourth aspect, in some implementations of the fourth aspect, the first tree building request includes a task identifier field, and the task identifier field indicates a first in-network computing task to be executed by using the first logical tree for in-network computing.

With reference to the fourth aspect, in some implementations of the fourth aspect, the sending module is configured to send the first tree building request to the fourth network node device when the first in-network computing task starts.

With reference to the fourth aspect, in some implementations of the fourth aspect, the sending module is configured to send a first data packet to the fourth network node device, where the first data packet includes the first tree building request, and the first data packet is for transmission of data of an in-network computing task.

According to a fifth aspect, a system for building a logical tree is provided, including at least one network node device and a plurality of computing node devices. The at least one network node device is configured to perform the method according to any one of the first aspect or the possible implementations of the first aspect, and the plurality of computing node devices are configured to perform the method according to any one of the second aspect or the possible implementations of the second aspect.

According to a sixth aspect, a computing device is provided, including a processor and a memory. The memory is configured to store instructions, and the processor is configured to invoke the instructions from the memory and run the instructions, to enable the computing device to perform the method according to any one of the first aspect or the possible implementations of the first aspect.

According to a seventh aspect, a computing device is provided, including a processor and a memory. The memory is configured to store instructions, and the processor is configured to invoke the instructions from the memory and run the instructions, to enable the computing device to perform the method according to any one of the second aspect or the possible implementations of the second aspect.

Optionally, the processor may be a general-purpose processor, and may be implemented by hardware or software. When the processor is implemented by the hardware, the processor may be a logic circuit, an integrated circuit, or the like. When the processor is implemented by the software, the processor may be a general-purpose processor, and is implemented by reading software code stored in the memory. The memory may be integrated into the processor, or may be located outside the processor and exist independently.

According to an eighth aspect, a chip is provided. The chip obtains instructions and executes the instructions to implement the method according to any one of the first aspect or the possible implementations of the first aspect.

According to a ninth aspect, a chip is provided. The chip obtains instructions and executes the instructions to implement the method according to any one of the second aspect or the possible implementations of the second aspect.

Optionally, in an implementation, the chip includes a processor and a data interface. The processor reads, through the data interface, instructions stored in a memory, to perform the method according to any one of the first aspect or the possible implementations of the first aspect.

Optionally, in an implementation, the chip may further include the memory. The memory stores the instructions. The processor is configured to execute the instructions stored in the memory. When the instructions are executed, the processor is configured to perform the method according to any one of the first aspect or the possible implementations of the first aspect.

According to a tenth aspect, a computer program product including instructions is provided. When the instructions are run by a computing device, the computing device is enabled to perform the method according to any one of the first aspect or the possible implementations of the first aspect.

According to an eleventh aspect, a computer program product including instructions is provided. When the instructions are run by a computing device, the computing device is enabled to perform the method according to any one of the second aspect or the possible implementations of the second aspect.

According to a twelfth aspect, a computer-readable storage medium is provided, including computer program instructions. When the computer program instructions are executed by a computing device, the computing device is enabled to perform the method according to any one of the first aspect or the possible implementations of the first aspect.

According to a thirteenth aspect, a computer-readable storage medium is provided, including computer program instructions. When the computer program instructions are executed by a computing device, the computing device is enabled to perform the method according to any one of the second aspect or the possible implementations of the second aspect.

For example, the computer-readable storage medium includes but is not limited to one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard disk drive (hard disk drive).

Optionally, in an implementation, the foregoing storage medium may be specifically a non-volatile storage medium.

### BRIEF DESCRIPTION OF DRAWINGS

FIG. 1 is a diagram of a relationship between resource reservation and resource usage of a network node device in a conventional solution;
FIG. 2 is a schematic block flowchart of a method for building a logical tree according to an embodiment of this application;
FIG. 3 is a diagram of a logical tree according to an embodiment of this application;
FIG. 4 is a diagram of a format of a tree building request packet according to an embodiment of this application;
FIG. 5 is a diagram of a tree building information table according to an embodiment of this application;
FIG. 6 is a diagram of another tree building information table according to an embodiment of this application;
FIG. 7 is a schematic block flowchart of another method for building a logical tree according to an embodiment of this application;
FIG. 8 is a schematic flowchart of building a logical tree by a system for building a logical tree according to an embodiment of this application;
FIG. 9 is a diagram of tree building time points for static tree building and dynamic tree building;
FIG. 10 is another schematic flowchart of building a logical tree by the system for building a logical tree according to an embodiment of this application;
FIG. 11 is a schematic block flowchart of another method for building a logical tree according to an embodiment of this application;
FIG. 12 is a diagram of a process of building a single-layer logical tree according to an embodiment of this application;
FIG. 13 is a diagram of a process of building a dual-layer logical tree according to an embodiment of this application;
FIG. 14 is a block diagram of a structure of a network node device for building a logical tree according to an embodiment of this application;
FIG. 15 is a block diagram of a structure of a computing node device for building a logical tree according to an embodiment of this application;
FIG. 16 is a block diagram of a structure of a system for building a logical tree according to an embodiment of this application; and
FIG. 17 is a block diagram of a structure of a computing device according to an embodiment of this application.

### DESCRIPTION OF EMBODIMENTS

The following describes technical solutions of embodiments in this application with reference to the accompanying drawings.

Aspects, embodiments, or features are presented in this application with reference to a system including a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, the terms such as "example" or "for example" are for representing giving an example, an illustration, or a description. Any embodiment or design scheme described as an "example" in this application should not be explained as being more preferred or having more advantages than another embodiment or design scheme. Exactly, the term "example" is for presenting a concept in a specific manner.

In embodiments of this application, "relevant (corresponding, relevant)" and "corresponding (corresponding)" may sometimes be interchangeably used. It should be noted that meanings expressed by the two are consistent when a difference between them is not emphasized.

Network architectures and service scenarios described in embodiments of this application are intended to describe the technical solutions in embodiments of this application more clearly, and do not constitute any limitation on the technical solutions provided in embodiments of this application. A person of ordinary skill in the art may know that with evolution of the network architecture and emergence of a new service scenario, the technical solutions provided in embodiments of this application are also applicable to similar technical problems.

Reference to "one embodiment", "some embodiments", or the like described in this specification means that a specific feature, structure, or characteristic described with reference to the embodiment is included in one or more embodiments of this application. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

In this application, "at least one" means one or more, and "a plurality of" means two or more. The term "and/or" describes an association relationship between associated objects and represents that three relationships may exist. For example, A and/or B may represent the following cases: Only A exists, both A and B exist, and only B exists, where A and B may be singular or plural. The character "/" generally indicates an "or" relationship between associated objects. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

For ease of understanding, terms and concepts that may be related to embodiments of this application are first described below.
1. In-network computing (in-network computing, INC): It is a technique that enables a network node device in a distributed computing cluster to perform specific computing, for example, an addition operation, on a packet field while performing packet forwarding, to offload partial computing tasks that originally need to be executed by a computing node device onto the network node device.
2. In-network computing task: It is a task based on in-network computing. Each time of computing or each time of communication performed by a distributed computing cluster may be referred to as a task, where computing performed by a computing node device in the distributed computing cluster is referred to as a computing task, and communication for a computing result performed between computing node devices through a network node device is referred to as a communication task. In a communication task process, if the network node device participating in the task is further responsible for performing in-network computing, the communication task may be referred to as an in-network computing task, for example, a communication task in artificial intelligence (artificial intelligence, AI) training or a communication task in high-performance computing (high-performance computing, HPC).
3. Application: It is a set of computing tasks and communication tasks, for example, one time of AI training or one time of HPC, executed to achieve a same purpose. One application may include one or more in-network computing tasks.
4. Logical tree: It is a tree structure including at least a part of network node devices and at least a part of computing node devices in a distributed computing cluster for executing in-network computing tasks. Each node in the logical tree corresponds to one computing node device or one network node device, and these devices are connected based on the tree structure indicated by the logical tree. A leaf node of the logical tree corresponds to a computing node device, and a non-leaf node corresponds to a network node device.

As data and computing scales expand, a computing capability of a single computing node can no longer meet computing requirements of data processing, making distributed computing through collaboration among a plurality of computing nodes becomes a prevailing trend. For example, currently, a large-scale AI model may need eight graphics processing units (graphics processing unit, GPU) to completely store all model parameters. After computing tasks are allocated to the plurality of computing nodes, the plurality of computing nodes need to communicate for their computing results (in other words, communication tasks). With the growth of a distributed computing cluster, the proportion of time for communication tasks gradually increases, eventually becoming a bottleneck that hampers the speed of the distributed computing.

In the in-network computing technology, partial computing tasks are offloaded onto a network node device with an in-network computing capability. This can alleviate the communication bottleneck in the distributed computing and accelerate the distributed computing. A computing procedure is as follows:
(1) Computing node devices and a network node device that participate in the network computing task first form a logical tree.
(2) Leaf nodes of the logical tree aggregate all data to a root node of the logical tree based on a connection path of the logical tree.
(3) After completing computing, a network node device corresponding to the root node broadcasts a computing result to computing node devices corresponding to the leaf nodes based on the connection path of the logical tree.

In the foregoing process, a part of a computing task of the edge-side computing node device is offloaded onto the network node device to complete, so that load of the computing node device can be reduced. In addition, compared with a conventional method in which data is exchanged between computing node devices through a network node device, the foregoing process reduces a quantity of data transmission times, and reduces a quantity of communication times from O(logN) to O(1), where N is a quantity of leaf nodes of the logical tree, to improve communication efficiency and save data bandwidth.

It can be learned from the foregoing that a corresponding logical tree needs to be built for execution of each in-network computing task. The logical tree functions in two terms: First, routing is determined. When a computing node device has known composition of the logical tree, it can be ensured that data of computing node devices corresponding to different leaf nodes is aggregated to a network node device corresponding to a same root node. Second, resources are reserved. The in-network computing needs to occupy a buffer resource and a connection resource of a network node device. Therefore, the composition of the logical tree means that the network node device participating in the composition has reserved the needed buffer resource for the network node device and has maintained status information of a connection needed for the in-network computing.

In a conventional solution, a logical tree is generally built through centralized static allocation. A specific node, for example, an aggregation manager (aggregation manager, AM), is responsible for building of the logical tree. The AM needs to obtain physical topology of a current distributed computing cluster from a subnet manager (subnet manager, SM), and notify, after the logical tree is built, related information of the logical tree to devices corresponding to all nodes. A specific procedure is as follows:
(1) The SM sends the physical topology to the AM. The AM establishes a connection between aggregation node (aggregation node, AN) modules of network node devices based on the topology, and records related connection information at the ANs.
(2) After connections between all ANs are established, a resource tree is formed on the AM, where the resource tree includes all network node devices and computing node devices that are usable for in-network computing.
(3) Before an in-network computing task starts, application information needs to be sent to the AM.
(4) The AM determines a subtree from the resource tree based on the application information, uses the subtree as a logical tree for the current in-network computing task, and notifies a related network node device to reserve a resource.
(5) After the resource is successfully reserved, the AM notifies ID information and topology information of the logical tree to computing node devices that serve as leaf nodes, so that the computing node devices determine data forwarding paths based on an ID of the logical tree.

The foregoing centralized static tree building method has two problems.

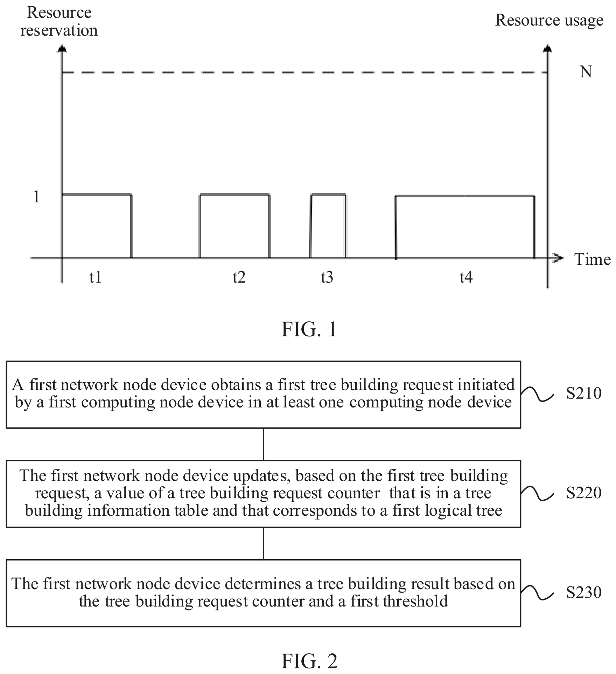

First, the static allocation requires resource reservation, resulting in low resource utilization. There are a plurality of sequential in-network computing tasks on a single application. During the static allocation, resources need to be reserved for all communication tasks in the application in advance. As a result, time-sequential tasks cannot reuse a same resource, and space resource utilization is low. Refer to a diagram of an example relationship between resource reservation and resource usage of a network node device in FIG. 1. It is assumed that a total resource capacity of the network node device is M. t1 to t4 are four of N sequential in-network computing tasks in a single application, and each task needs one unit of resource. With static allocation, the network node device needs to reserve N units of resources for the N in-network computing tasks. Therefore, a single network node device can host only M/N applications, only M/N resources are used at most during a single communication, and space resource utilization is M/N. However, actually, sequential in-network computing tasks may reuse a same resource, so that a single application needs one resource per unit time, and a single network node device can actually host up to M applications. In addition, as shown in FIG. 1, a plurality of sequential tasks in a single application are not back-to-back. Assuming that communication time: idle time = 4:1, four tasks equivalently occupy resources for five tasks in terms of time.

Second, the centralized tree building results in poor scalability and a poor capability of handling a failure of a single node. Logical tree allocation for the centralized tree building involves tree traversal, and computing complexity and space complexity of the tree traversal increase with a cluster scale. As a result, the scalability of the logical tree is poor. More critically, when the node responsible for tree building fails or is down, an in-network computing capability of the entire cluster fails, and a resource reserved by a network node device for in-network computing cannot be released. This may cause memory leakage and the like, resulting in poor reliability. Therefore, how to improve the reliability of building the logical tree by the distributed computing cluster becomes a technical problem that needs to be urgently resolved.

In view of this, for the poor reliability of the centralized tree building, embodiments of this application provide a method, a network node device, a computing node device, and a system for building a logical tree, to enable an edge-side computing node device to initiate a tree building request, and include, in the tree building request, structure information of a node on a branch that is of a logical tree and on which the computing node device is located; and enable a network node device to count a quantity of tree building requests that have been aggregated by a node that is in the logical tree and that corresponds to the network node device, so that each network node device only needs to process a tree building request forwarded by a device connected to the network node device, to avoid a failure of the entire logical tree that is caused by a failure of a single network node device, and improve reliability of building the logical tree by a distributed computing cluster.

FIG. 2 is a schematic flowchart of a method for building a logical tree according to an embodiment of this application. Optionally, the method may be performed by a first network node device in a distributed computing cluster. The distributed computing cluster includes a plurality of computing node devices and at least one network node device, and the first network node device is one of the at least one network node device. The at least one network node device at least includes one network node device that can centralize data of each of the plurality of computing node devices to the network node device through a connection path of the distributed computing cluster.

The network node device is a device with a packet forwarding function in the distributed computing cluster, and includes but is not limited to a switch, a router, or the like. Optionally, the network node device may further have a specific quantity of computing and buffer resources, and provide functions of reading, writing, deletion, updating, addition, and the like for stored data. To be specific, the network node device can provide an in-network computing capability. In another embodiment, the network node device that provides the in-network computing capability may also be referred to as an in-network computing switch. However, it should be understood that the in-network computing switch and the network node device described in this embodiment of this application are a same device.

The computing node device is a device that is responsible for executing a computing task in the distributed computing cluster, and includes but is not limited to at least one of the following: a central processing unit (central processing unit, CPU), a graphics processing unit (graphics processing unit, GPU), a tensor processing unit (tensor processing unit, TPU), an intelligent processing unit (intelligent processing unit, IPU), a neural processing unit (neural processing unit, NPU), or the like. Because the computing node device is mostly at least one of the foregoing processors or a computing device including at least one of the foregoing processors, in some implementations, the computing node device described in this embodiment of this application is also represented by an xPU.

As shown in FIG. 2, the method includes the following steps.

S210: The first network node device obtains a first tree building request initiated by a first computing node device in the plurality of computing node devices.

For example, in step S210, the first network node device can obtain the tree building request initiated by the first computing node device. Specifically, the first tree building request indicates a quantity of leaf nodes of each ancestor node in all ancestor nodes of a first leaf node in a first logical tree, where the first logical tree is a tree structure that the first tree building request indicates the distributed computing cluster to build, and the first leaf node is a leaf node that is in the first logical tree and that corresponds to the first computing node device.

Optionally, a tree building request may include a network hop count field and at least one leaf count field.

The network hop count field indicates a quantity of network node devices that the tree building request passes through before the tree building request is forwarded from a computing node device that initiates the tree building request to a network node device that currently obtains the tree building request. Using the first tree building request that is initiated by the first computing node device and that is obtained by the first network node device as an example, the network hop count field indicates a quantity of network node devices other than the first network node device on a forwarding path through which the first tree building request is forwarded from the first computing node device to the first network node device. Therefore, the first tree building request obtained by the first network node device may not be directly sent by the first computing node device to the first network node device.

In some possible implementations, when a value of the network hop count field in the first tree building request received by the first network node device is equal to 0, the first network node device directly receives the first tree building request sent by the first computing node device. To be specific, the first network node device is directly connected to the first node device in the cluster, and a node that is in the logical tree and that corresponds to the first network node device is a parent node of the first leaf node that is in the logical tree and that corresponds to the first computing node device.

In some other possible implementations, when a value of the network hop count field in the first tree building request received by the first network node device is greater than 0, the first tree building request received by the first network node device is sent by another network node device, for example, a third network node device connected to the first network node device in the cluster. Specifically, after obtaining the first tree building request, the third network node device increases the value of the network hop count field in the first tree building request by 1, and forwards the first tree building request with an updated network hop count field to the first network node device. The first tree building request obtained by the third network node device may be directly sent by the first computing node device, or may be obtained from another connected network node device.

By analogy, when a computing node device initiates a tree building request, a network hop count field in the tree building request sent by the computing node device is 0. Each time the tree building request arrives at a network node device, if the tree building request needs to continue to be forwarded, the network node device increases a value of the network node field in the tree building request by 1 and then sends the tree building request. In the foregoing method, each network node device that receives the tree building request can directly determine, based on the value of the network hop count field in the tree building request, a layer of a node that is in a logical tree and that corresponds to the network node device. Therefore, the tree building method in this embodiment of this application is applicable to a network node device at any layer. This improves an application scope of the method for building a logical tree.

The at least one leaf count field indicates a quantity of leaf nodes belonging to each ancestor node of a leaf node corresponding to the computing node device that initiates the tree building request. Using the first tree building request as an example, the first tree building request may include N leaf count fields, where N is a height of a root node in the first logical tree, and N is a positive integer. An n^{th} leaf count field in the N leaf count fields indicates a quantity of leaf nodes of an ancestor node that is of the first leaf node and whose height is n in the first logical tree, where n is a positive integer less than or equal to N.

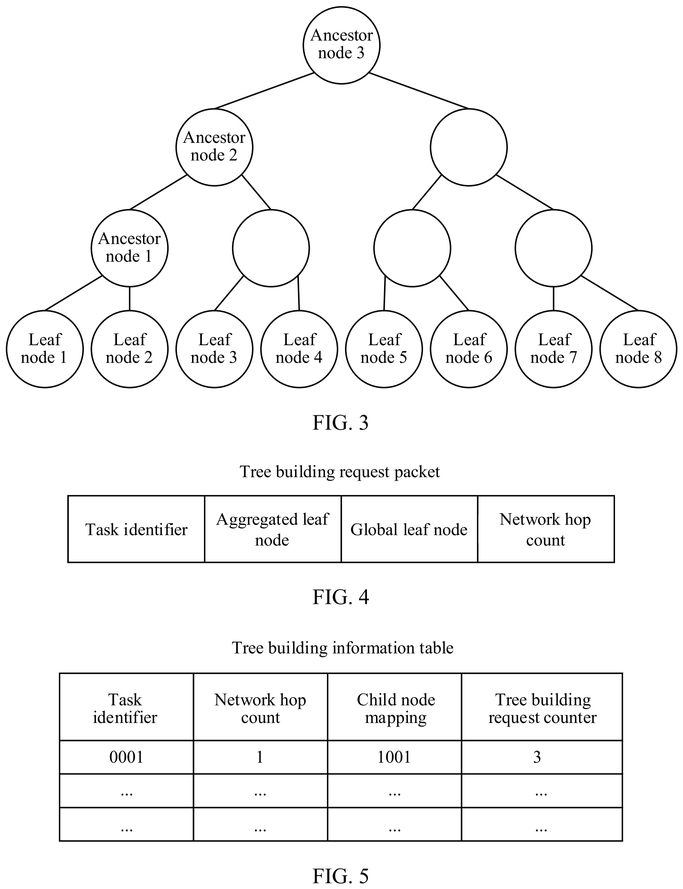

It should be understood that the quantity of leaf nodes of the ancestor node is a quantity of leaf nodes included in a subtree that uses the ancestor node as a root node. A height of a node is a length of a path from a leaf node to the node. FIG. 3 is a diagram of a logical tree. The logical tree shown in FIG. 3 is used as an example for description, and a depth of the logical tree is 3. A leaf node 1 has three ancestor nodes: an ancestor node 1, an ancestor node 2, and an ancestor node 3. The ancestor node 1 may also be referred to as a parent node of the leaf node 1, and the ancestor node 3 is a root node of the logical tree. The ancestor node 1 has a height of 1, and is directly connected to the leaf node 1 and a leaf node 2. Therefore, a quantity of leaf nodes of the ancestor node 1 is 2. The ancestor node 2 has a height of 2, and is directly connected to two child nodes. One of the two child nodes is connected to the leaf node 1 and the leaf node 2, and the other is connected to a leaf node 3 and a leaf node 4. Therefore, a quantity of leaf nodes of the ancestor node 2 is 4. The ancestor node 3 has a height of 3. By analogy, a quantity of leaf nodes of the ancestor node 3 is 8, and the leaf nodes are respectively the leaf node 1 to a leaf node 8.

Optionally, the tree building request may further include a task identifier field indicating an in-network computing task to be executed by using the logical tree. A network node device can distinguish, based on the task identifier field in the tree building request, logical trees for different in-network computing tasks, so that the network node device is allowed to build trees for a plurality of in-network computing tasks. A specific implementation is described in detail below.

FIG. 4 is a diagram of a tree building request packet according to embodiments of this application. The tree building request packet shown in FIG. 4 is applicable for a logical tree of a specific structure, to be specific, leaf nodes in the to-be-built logical tree have a same depth, and a depth of the to-be-built logical tree is less than or equal to 2. As shown in FIG. 4, the tree building request packet includes a task identifier (TaskID) field, an aggregated leaf node (AggLeaf) field, a global leaf node (GlobalLeaf) field, and a network hop count (Hop) field. Because the depth of the to-be-built logical tree is less than or equal to 2, to be specific, a node other than a leaf node in the logical tree may only be a root node or a parent node directly connected to a leaf node, the leaf count field may be simplified into an AggLeaf field and a GlobalLeaf field. The AggLeaf field indicates a quantity of leaf nodes aggregated at a parent node of a leaf node that initiates the tree building request, and the GlobalLeaf field indicates a total quantity of leaf nodes in the to-be-built logical tree.

S220: The first network node device updates, based on the first tree building request, a value of a tree building request counter that is in a tree building information table and that corresponds to the first logical tree.

For example, in step S220, the first network node device can count, based on the first tree building request, a quantity of tree building requests that have been received by the first network node device from leaf nodes. Specifically, the first network node device maintains the tree building information table, and the tree building information table includes the tree building request counter corresponding to the first logical tree, where the tree building request counter is for recording a quantity of tree building requests that have been received by the first network node device and that are initiated by computing node devices corresponding to non-repeated leaf nodes of a same height in the first logical tree.

In some possible implementations, a network node device can identify a type of a received tree building request based on a value of a network hop count field in the tree building request, to determine a quantity of tree building requests that are aggregated in the tree building request and that are from computing node devices corresponding to leaf nodes.

As described in S210, when the value of the network hop count field is equal to 0, it indicates that a node corresponding to the network node device is directly connected to a leaf node in the logical tree. Therefore, the network node device can determine that the tree building request is a non-aggregated tree building request, and includes a tree building request of only one leaf node. In this case, a value of a tree building request counter that is in a tree building information table and that corresponds to the logical tree is increased by 1, to indicate that the current network node device successfully collects a tree building request from one leaf node.

As described in S210, when the value of the network hop count field is greater than 0, it indicates that a node corresponding to the network node device is not directly connected to a leaf node in the logical tree. Therefore, the network node device can determine that the tree building request is an aggregated tree building request, where a tree building request from at least one leaf node is aggregated in the tree building request. In this case, a value of a tree building request counter that is in a tree building information table and that corresponds to the logical tree is increased by m, where m is a value of an M^{th} leaf count field in N leaf count fields in the tree building request, and M is the value of the network hop count field in the tree building request. The value of the network hop count field being M indicates that the network node device is an (M+1)^{th} network node device that receives the tree building request. Therefore, a height of a node that is in the logical tree and that corresponds to the network node device is M+1. This means that a network node device that sends the tree building request to the network node device is equivalent to an ancestor node that is of a leaf node and whose height is M in the logical tree. If the tree building request is successfully received, it indicates that the ancestor node whose height is M has successfully collected tree building requests from all leaf nodes of the ancestor node, and reports an aggregated result to the ancestor node whose height is M+1 and that is connected to the ancestor node whose height is M. This is equivalent to: The current network node successfully receives tree building requests from all leaf nodes of a child node of the current network node.

According to the foregoing solution, the network node device can count, based only on a request sent by a device connected to the network node device, a quantity of received tree building requests from leaf nodes, to provide a basis for decoupling a tree building process from topology and achieving a distributed tree building capability.

Optionally, the tree building information table maintained by the network node device may further include a network hop count that corresponds to the tree building request counter, where the network hop count indicates a value of a network hop count field in a received tree building request counted by the tree building request counter. Specifically, the tree building information table may include a plurality of entries, and each entry includes one tree building request counter and one quantity of network hops. A quantity of network hops that corresponds to a tree building request counter is a network hop count that is recorded in a same entry as the tree building request counter. In this case, after obtaining the tree building request, the network node device first compares the value of the network hop count field in the obtained tree building request with a value of the network hop count for the corresponding logical tree in the tree building information table. If the value of the network hop count field in the tree building request is the same as the recorded value of the network hop count, the tree building request counter in a corresponding entry is updated according to the foregoing method. If the value of the network hop count field in the tree building request is different from the recorded value of the network hop count, a new entry is created to record the value of the network hop count field, and a tree building request counter in the new entry is assigned an initial value.

Because the logical tree is a virtual structure, nodes may not be in one-to-one correspondence with physical devices, to be specific, one network node device may correspond to nodes at a plurality of different layers in a same logical tree. In this case, values of network hop count fields in tree building requests received by the network node device may be different, and separate counting needs to be performed. Therefore, according to the foregoing solution, the network node device can determine whether different received tree building requests indicate that the network node device corresponds to a node at a same layer in the logical tree. When a plurality of tree building requests indicate nodes at different layers in the logical tree, quantities of tree building requests received by the nodes at the layers are counted separately, so that the built logical tree has a capability of mapping nodes at different layers to a same network node device.

Optionally, when the tree building request includes the identifier field, the tree building information table maintained by the network node device may further include a task identifier corresponding to the tree building request counter, where the task identifier indicates a value of a task identifier field in the received tree building request counted by the tree building request counter. In this case, after obtaining the tree building request, the network node device first compares a value of the task identifier field in the obtained tree building request with a value of a task identifier in a recorded entry in the tree building information table. If the value of the task identifier field in the tree building request is the same as the recorded value of the task identifier, a tree building request counter in the corresponding entry is updated according to the foregoing method. If the value of the task identifier field in the tree building request is different from the recorded value of the task identifier, a new entry is created to record the value of the task identifier field, and a tree building request counter in the new entry is assigned an initial value.

It should be understood that, similar to the foregoing meaning of the correspondence between the tree building request counter and the network hop count, the meaning of the correspondence between the tree building request counter and the task identifier is that the tree building request counter and the task identifier are stored in a same entry in the tree building information table. Similar descriptions that appear in the following also indicate a same meaning, and details are not described again.

According to the foregoing solution, the network node device can establish a mapping relationship between the logical tree and the in-network computing task. In this way, the network node device can distinguish logical trees for different in-network computing tasks, to allow the network node device to build trees for a plurality of in-network computing tasks, and improve resource utilization.

Optionally, the tree building information table maintained by the network node device may further include a child node mapping corresponding to the tree building request counter, where the child node mapping indicates a port that is in at least one port of the network node device and that is for receiving a received tree building request. Specifically, the received tree building request is a tree building request counted by the corresponding tree building request counter. In this case, after obtaining the tree building request, the network node device first determines a port for connecting a device that sends the tree building request to the network node device, and searches for a child node mapping in a corresponding entry in the tree building information table, to determine whether a tree building request for the same logical tree has been received through the port. If the child node mapping indicates that no tree building request for the same logical tree has been received through the corresponding port, a tree building request counter in the corresponding entry is updated according to the foregoing method. If the child node mapping indicates that the tree building request for the same logical tree has been received through the corresponding port, it indicates that the packet is a repeatedly sent packet, the packet is discarded, and a tree building request counter is not updated.

According to the foregoing solution, the network node device can determine whether a newly received tree building request has been counted, to avoid a counting error caused when a tree building request is repeatedly sent, and improve accuracy of building the logical tree.

FIG. 5 is a diagram of a tree building information table according to this embodiment of this application. As shown in FIG. 5, a task identifier (TaskID), a network hop count (Hop), a child node mapping (Bitmap), and a tree building request counter (counter) may be recorded in the tree building information table. As shown in FIG. 5, the tree building information table may include a plurality of entries, the foregoing information is recorded in each entry, and the entries are independent of each other. Using a 1^{st} entry in FIG. 5 as an example, tree building requests aggregated by a network node device corresponding to a node whose height is 1 in a logical tree whose TaskID is 0001 are recorded in the 1^{st} entry. A child node mapping uses 4 bits to respectively map four ports for connecting the network node device to other devices. For example, a bit value 0 may indicate that a tree building request has not been received through a port, and a bit value 1 may indicate that a tree building request has been received through the port. Using 1001 in the figure as an example, 1001 may indicate that the network node device has received a tree building request from a device connected to a 1^{st} port, and has received a tree building request from a device connected to a 4^{th} port. counter equal to 3 indicates that tree building requests initiated by computing node devices corresponding to three leaf nodes are aggregated in the two tree building requests received from the foregoing two devices.

S230: The first network node device determines a tree building result based on the tree building request counter and a first threshold.

For example, in step S230, the first network node device can determine, based on the quantity that is of received and non-repeated tree building requests initiated by the computing node devices corresponding to the leaf nodes of the same height and that is counted by the tree building request counter, a tree building progress of the node that is in the logical tree and that corresponds to the first network node.

In some possible implementations, the network node device can compare a quantity that is of leaf nodes belonging to the node corresponding to the network node device and that is indicated by the tree building request with the value counted by the tree building request counter, to determine whether the node corresponding to the network node device has collected tree building requests of all leaf nodes belonging to the node. Specifically, using the first tree building request obtained by the first network node device as an example, the first network node device may use a value of a (K+1)^{th} leaf count field in the N leaf count fields in the first tree building request as the first threshold, where K is the value of the network hop count field in the first tree building request. Therefore, the first threshold indicates a quantity of leaf nodes of a node that is in the first logical tree and that corresponds to the first network node device.

When a new value of the tree building request counter is equal to the first threshold, the first network node device can determine that tree building requests of all child nodes of the first network node device have been collected, to be specific, building of a subtree that is in the first logical tree and that uses the node corresponding to the first network node device as a root node is completed.

When a new value of the tree building request counter is greater than the first threshold, the first network node device can determine that an error occurs in the tree building process, and therefore discards the newly obtained packet, interrupts tree building, and deletes tree building information corresponding to the first tree building request.

When a new value of the tree building request counter is greater than the first threshold, the first network node device can determine that tree building requests of all child nodes of the first network node device have not been completely collected, continue to wait to obtain a tree building request sent by another device, and repeat the foregoing counting and determining processes after obtaining a new tree building request, until tree building succeeds or an error is found.

According to the foregoing solution, the network node device counts the quantity of tree building requests that are from the leaf nodes and that have been collected by the node corresponding to the network node device. When the quantity of collected tree building requests of the leaf nodes is the same as the quantity of leaf nodes that should belong to the network node device, it indicates that a subtree structure using the node corresponding to the network node device as a root node is complete. Therefore, the network node device can determine, without knowing a quantity of child nodes directly connected to the network node device, that the tree building requests sent by all the child nodes have been collected, to be specific, the network node device can complete tree building only by perceiving information about the leaf nodes belonging to the network node device, to resolve a global-topology dependency problem of the tree building.

In some possible implementations, the network node device may further compare a total quantity that is of leaf nodes included in the to-be-built logical tree and that is indicated by the tree building request with the value counted by the tree building request counter, to determine whether the node corresponding to the network node device corresponds to a root node of the to-be-built logical tree, and further determine whether to continue to forward the tree building request to a next-hop network node device. Specifically, using the first tree building request obtained by the first network node device as an example, the first network node device may use a value of an N^{th} leaf count field in the N leaf count fields in the first tree building request as a second threshold, where the second threshold indicates a total quantity of leaf nodes in the first logical tree.

When the new value of the tree building request counter is equal to the second threshold, the first network node device can determine that the node corresponding to the first network node device is the root node of the first logical tree. Success of the tree building at the root node means that the entire first logical tree is successfully built. Therefore, the first network node device forwards first tree building success information based on the path for forwarding the first tree building request to the first network node device. Optionally, the first network node device may determine, based on a child node mapping recorded in the tree building information table, ports through which tree building information has been received, and send, through these ports, the tree building success information to the child nodes connected to the first network node device.

When the new value of the tree building request counter is greater than the second threshold, the first network node device can determine that an error occurs in the tree building process, and therefore discards the newly obtained packet, interrupts the tree building, and deletes the tree building information corresponding to the first tree building request.

When the new value of the tree building request counter is less than the second threshold, the first network node device can determine that the node corresponding to the first network node device is not the root node of the first logical tree. Therefore, after the node corresponding to the first network node device collects the tree building requests of all the child nodes, the first network node device sends an aggregated tree building request to another network node device, for example, a second network node device connected to the first network node device in the cluster, and waits for a tree building result fed back by the second network node device.

Specifically, when the new value of the tree building request counter is less than the second threshold, the first network node device increases the value of the network hop count field in the first tree building request obtained by the first network node device by 1, and sends the first tree building request with an updated value of the network hop count field to the second network node device. After receiving the first tree building request, the second network node device may continue to build the logical tree according to the method provided in this embodiment of this application. If the logical tree is successfully built, the second network node device may send tree building success information to the first network node device. After receiving the tree building success information from the second network node device, the first network node device may determine that the logical tree, namely, the first logical tree, is successfully built. Therefore, the first network node device may continue to forward the tree building success information to the child nodes based on the path for forwarding the first tree building request to the first network node device.

According to the foregoing solution, after the network node device collects the tree building requests of all the child nodes of the node that is in the logical tree and that corresponds to the network node device, the network node device compares the quantity of leaf nodes belonging to the node corresponding to the network node device with the total quantity that is of leaf nodes included in the logical tree and that is reflected in information in the tree building request, to determine whether the node corresponding to the network node device is the root node of the logical tree, and can continue to forward, for a non-root node, the tree building request to the next-hop network node device, so that in the tree building process, the network node device only needs to determine whether to forward the tree building request to the next-hop network node device, and does not need to know a complete structure of the logical tree, to avoid tree traversal in the tree building process. In this way, computing and space complexity are reduced, and scalability of the logical tree is improved.

Optionally, for a network node device corresponding to a non-root node in the logical tree, maintained tree building information table may further include a parent node mapping corresponding to a tree building request counter, where the parent node mapping indicates a port for connecting the network node device to a network node device corresponding to a parent node of the node that is in the logical tree and that corresponds to the network node device. Using the first network node device as an example, the tree building success information received by the first network node device is sent by the second network node device. Therefore, a node that is in the logical tree and that corresponds to the second network node device is a parent node of the node corresponding to the first network node device. After receiving the tree building success information sent by the second network node device, the first network node device may add a parent node mapping to a corresponding entry in the tree building information table, to indicate a port through which the tree building success information is received.

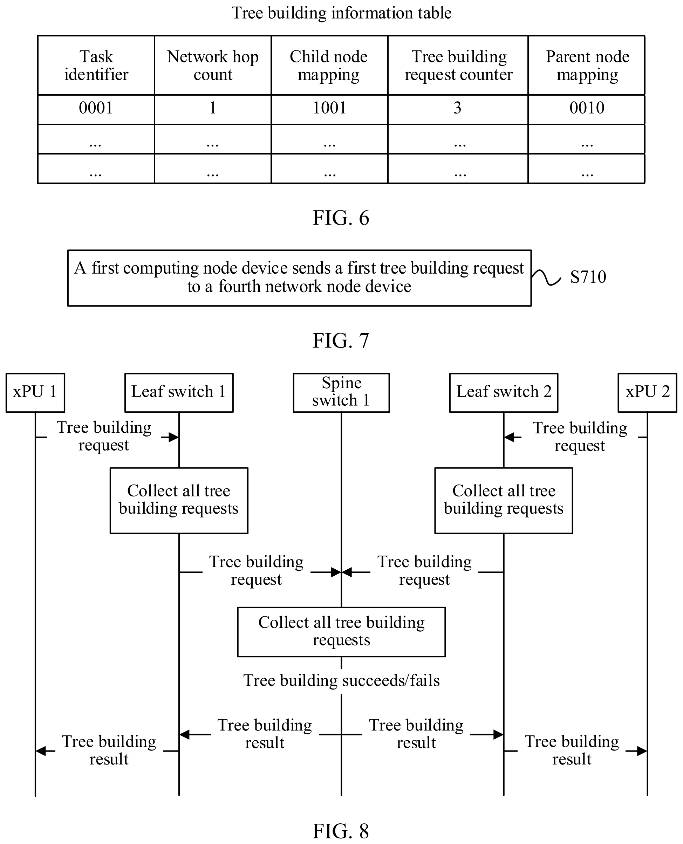

FIG. 6 is a diagram of another tree building information table according to this embodiment of this application. In comparison with the tree building information table shown in FIG. 5, in addition to the task identifier (TaskID), the network hop count (Hop), the child node mapping (Bitmap), and the tree building request counter (counter), a parent node mapping (Bitmap) is further recorded in the tree building information table shown in FIG. 6. Similar to the child node mapping, the parent node mapping uses 4 bits to respectively map four ports for connecting the network node device to other devices. A value that is of a 3^{rd} bit in the parent node mapping and that is 1 indicates that the tree building success information received by the network device is sent by a network node device connected to the network node device through a 3^{rd} port of the network device. In a process of using the logical tree, data received by the network node device is aggregated to the next-hop network node device through the 3^{rd} port.

According to the foregoing solution, the network node device records the port for connecting the network node device to the parent node, to establish a mapping relationship between a path in the logical tree and a physical connection path between devices. This ensures that the logical tree can be normally used during a task.

The foregoing describes, with reference to FIG. 2 to FIG. 6, the method performed by the network node device in the method for building a logical tree that is provided in embodiments of this application. For the computing node device, embodiments of this application also provide a corresponding method for building a logical tree. The following provides specific descriptions with reference to FIG. 7.

FIG. 7 is a schematic flowchart of another method for building a logical tree according to an embodiment of this application. Optionally, the method may be performed by a first computing node device in a distributed computing cluster. Optionally, the method shown in FIG. 7 may correspond to the method shown in FIG. 2. Therefore, for specific descriptions of related parts, refer to the foregoing descriptions of the method shown in FIG. 2. Details are not described again.

As shown in FIG. 7, the method includes the following steps.

S710: The first computing node device sends a first tree building request to a fourth network node device.

For example, in step S710, the first computing node device can actively initiate the first tree building request. Specifically, the first tree building request indicates a quantity of leaf nodes of each ancestor node in all ancestor nodes of a first leaf node in a first logical tree, where the first logical tree is a tree structure that the first tree building request indicates the distributed computing cluster to build, and the first leaf node is a node that is in the first logical tree and that corresponds to the first computing node device.

Optionally, the first tree building request may have same fields as the first tree building request in the method shown in FIG. 2. In the first tree building request sent by the first computing node device, a value of a network hop count field is 0.

It should be understood that the fourth network node device is a network node device that is in the distributed cluster and that is directly connected to the first computing node device, and the first tree building request sent by the first computing node device is directly received by the fourth network node device. Therefore, the fourth network node device and the first network node device in the method shown in FIG. 2 may be a same network node device, or may be different network node devices.

According to the technical solution in this embodiment of this application, the edge-side computing node device actively initiates the tree building request, and includes, in the tree building request, structure information of a node on a branch that is of the logical tree and on which the node corresponding to the computing node device is located; and the network node device counts a quantity of tree building requests that have been aggregated by a node that is in the logical tree and that corresponds to the network node device, so that each network node device only needs to process a tree building request forwarded by a device connected to the network node device, to avoid a failure of the entire logical tree that is caused by a failure of a single network node device, and improve reliability of building the logical tree by the distributed computing cluster.

FIG. 8 is a schematic flowchart of building a logical tree by a system that is for building a logical tree and that includes computing node devices and network node devices according to an embodiment of this application. As shown in FIG. 8, an xPU 1 and an xPU 2 are two computing node devices in the system, and a leaf switch 1, a leaf switch 2, and a spine switch 1 are three network node devices in the system. The leaf switch and the spine switch are two types of network node devices.

The xPU 1 sends a tree building request to the leaf switch 1 directly connected to the xPU 1, and the xPU 2 sends a tree building request to the leaf switch 2 directly connected to the xPU 2. Optionally, the xPU 1 and the xPU 2 may respectively send the tree building requests according to the method shown in FIG. 7.

The leaf switch 1 and the leaf switch 2 respectively receive the tree building requests sent by the computing node devices directly connected to the leaf switch 1 and the leaf switch 2, and count quantities of collected tree building requests that are from computing node devices corresponding to leaf nodes in the logical tree. After collecting tree building requests of all leaf nodes belonging to a node that is in the logical tree and that corresponds to the leaf switch, the leaf switch aggregates the collected tree building requests and forwards an aggregated tree building request to the spine switch. The spine switch 1 corresponds to a root node of the logical tree, and counts, based on the aggregated tree building request from the leaf switch, a quantity of collected tree building requests from computing node devices corresponding to leaf nodes in the logical tree. After collecting tree building requests of all leaf nodes in the to-be-built logical tree, the spine switch 1 determines that tree building succeeds. If time expires or an error occurs, tree building fails. Optionally, the leaf switch 1, the leaf switch 2, and the spine switch 1 may separately build a logical tree according to the method shown in FIG. 2.

After the spine switch 1 determines a tree building result, the spine switch 1 separately delivers the tree building result to the xPU 1 and the xPU 2 through the leaf switch 1 and the leaf switch 2 based on a path for aggregating the tree building results to the spine switch 1.

In some possible implementations, a first logical tree built by the xPU 1, the xPU 2, the leaf switch 1, the leaf switch 2, and the spine switch 1 in FIG. 8 may be a logical tree for executing a first in-network computing task. Optionally, the xPU 1 and the xPU 2 may initiate the tree building request when the first in-network computing task starts. In addition, after the first in-network computing task ends, the leaf switch 1, the leaf switch 2, and the spine switch 1 may respectively delete tree building information for the first logical tree in respective tree building information tables, to release resources of the network node devices.

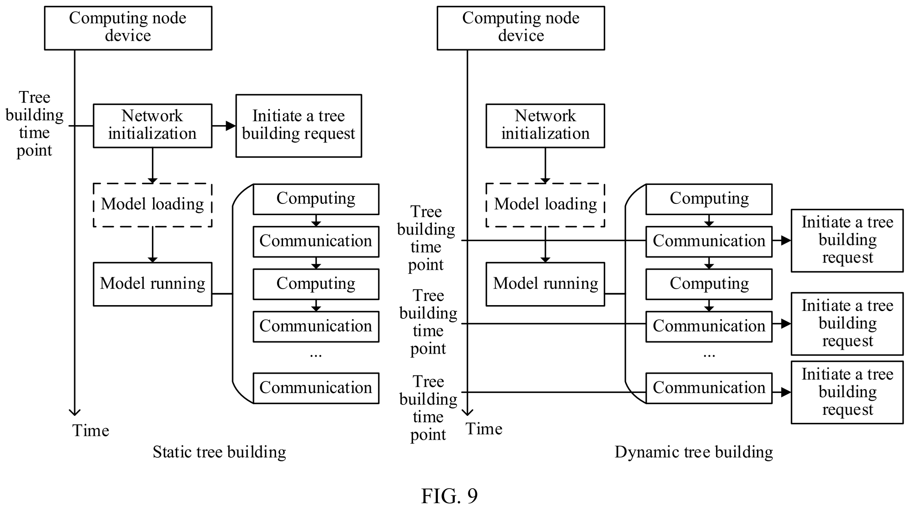

According to the foregoing solution, the building of the logical tree is unbound from an application, and is changed to dynamic building based on the task, to optimize a time point for building the logical tree. FIG. 9 is a diagram of tree building time points for static tree building and dynamic tree building.

As shown on the left side of FIG. 9, in conventional solutions, a logical tree is built through the static tree building. An application shown in FIG. 9 is AI model training, and may include time nodes such as network initialization, model loading, and model running. The model running specifically includes a plurality of computing tasks and a plurality of communication tasks. An in-network computing technology enables a network node device in a communication task to undertake a specific part of a computing task. However, because the static tree building is centrally controlled by one tree building node, the tree building time point is within the network initialization, and a resource is released after the model running ends, so that the resource of the network node device is occupied in a whole process of the AI model training application.

The right side of FIG. 9 shows the dynamic tree building according to embodiments of this application. Because a tree building process is completely controlled by a computing node device and a network node device that participate in logical tree building, and topology information does not need to be obtained in the tree building process, resources do not need to be reserved at the beginning of an application. A tree building time point is at the beginning of each communication task, resources for current tree building may be released when the communication task ends, and a logical tree for a next communication task is built when the next communication task starts.

Therefore, according to the foregoing solution, a computing node device sends a tree building request when an in-network computing task starts, to start to build a tree, and releases, after the in-network computing task ends, a resource occupied by the logical tree, so that the logical tree is dynamically built with the task. In this way, there is no need to reserve a resource in advance or occupy a resource for a long period of time, to improve resource utilization.

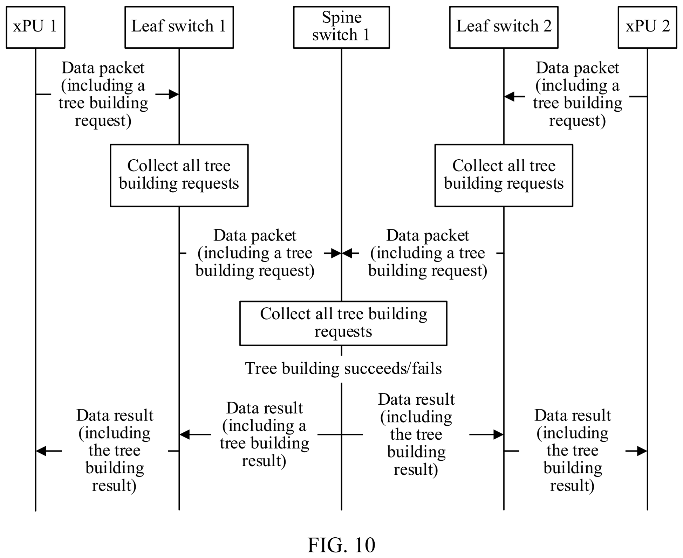

In some possible implementations, a tree building request and a tree building result may be sent together with data packets in a current in-network computing task. In this case, FIG. 10 is another schematic flowchart of building a logical tree by the system that is for building a logical tree and that includes computing node devices and network node devices according to an embodiment of this application. As shown in FIG. 10, a difference from the procedure shown in FIG. 8 lies in that a tree building request and a tree building result sent between the xPU 1, the xPU 2, the leaf switch 1, the leaf switch 2, and the spine switch 1 are all included in packets in data communication.

Specifically, as described above, for an in-network computing task, data needed by in-network computing needs to be centralized from computing node devices corresponding to leaf nodes to a network node device corresponding to a root node. After obtaining computing result data through computing, the network node device corresponding to the root node broadcasts the computing result data to the computing node devices corresponding to the leaf nodes. Therefore, the tree building request may be included in a data packet that is needed by the in-network computing from the computing node devices to the network node device. The network node device corresponding to the root node performs in-network computing while building a tree, and sends, after the tree is successfully built and the computing result data is obtained, a computing result data packet to a next-level network node device based on the successfully built logical tree. In addition, because the packet carries tree building success information, when receiving the computing result data, the next-level network node device can also determine that the logical tree is successfully built, and therefore can continue to transfer the computing result data based on a structure of the successfully built logical tree. By analogy, the tree building success information can finally arrive at the computing node devices together with the computing result data.

According to the foregoing solution, the tree building request is included in the normal data packet of the in-network computing task, so that in-band building of the logical tree can be implemented without additional packet transmission, to reduce signaling overheads for building the logical tree.

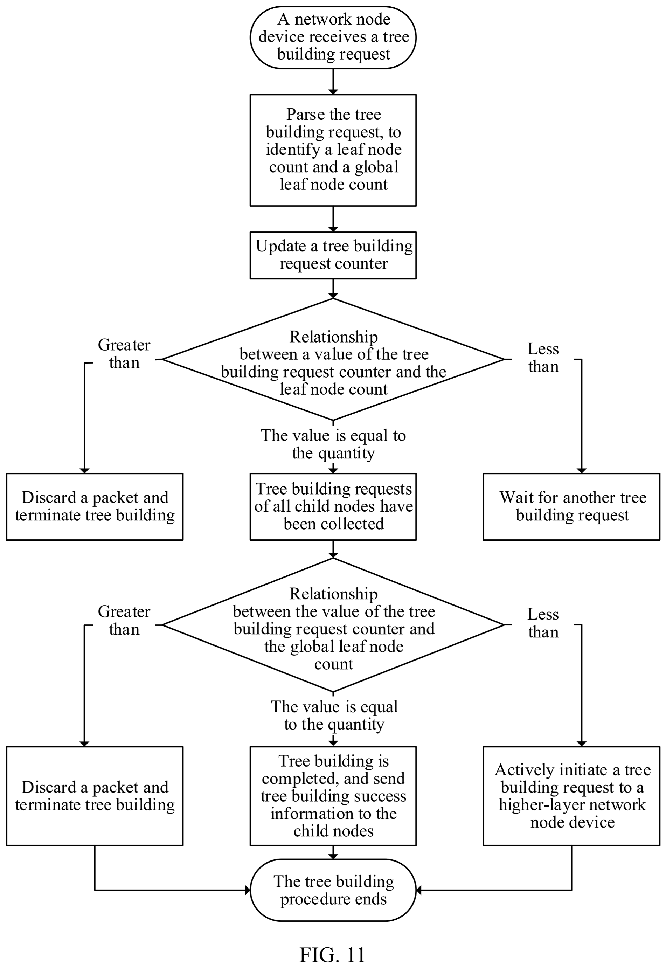

FIG. 11 is a diagram of an overall procedure for a method for building a logical tree according to an embodiment of this application when a depth of a to-be-built logical tree is less than or equal to 2 and leaf nodes have a same depth. The following describes the procedure shown in FIG. 11 in detail with reference to two specific embodiments.

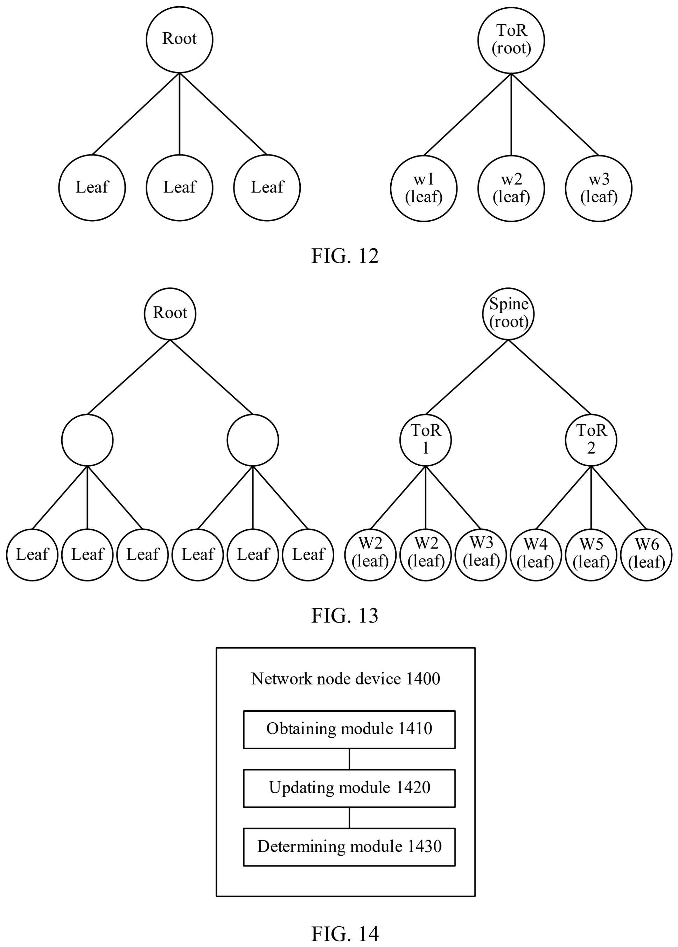

FIG. 12 is a diagram of building a single-layer logical tree through a top-on-rack switch (top-on-rack switch, ToR) according to Embodiment 1. A left side of FIG. 12 is a diagram of a structure of the to-be-built logical tree, and a right side shows a mapping relationship determined for network topology of a network node device and computing node devices based on the to-be-built logical tree. The ToR is a network node device, and w1, w2, and w3 represent three computing node devices. A tree building procedure is as follows:
Step 1: The computing node device initiates a tree building request. w1, w2, and w3 may obtain an address of the ToR by using a configuration file, to send the tree building request to the ToR. In the tree building request packets sent by w1, w2, and w3, a value of a network hop count field is Hop=0, a value of an aggregated leaf node field is AggLeaf=3, and a value of a global leaf node field is GlobalLeaf=3.
Step 2: The network node device receives the tree building request, and performs the following processing:
   Sub-step 1: Parse the tree building request packet, and query a tree building information table by using a value of a task identifier field in the tree building request, to determine whether a related tree building entry exists. If the related tree building entry exists, it is further queried whether a value of a network hop count in the related tree building entry is the same as the value of the network hop count field in the tree building request. If the values are the same, counting continues through a tree building request counter in the tree building entry. If the values are different, a new tree building entry is created. If the tree building entry does not exist, a new tree building entry is also created. When the new tree building entry is created, the value of the task identifier field and the value of the network hop count field in the tree building request are recorded in the new tree building entry, and a tree building request counter and a child node mapping are both initialized to 0.
   Sub-step 2: Ingress port for the tree building request packet.
   Sub-step 3: Determine whether the tree building request packet is a repeated packet. A bit to which the determined ingress port for the tree building request packet is mapped in a child node mapping is determined based on the port. If a value of the bit in the child node mapping indicates that a tree building request packet has been received through the port, the current packet is a repeated packet and is discarded, and no subsequent step is performed. If a value of the bit in the child node mapping indicates that no tree building request packet has been received through the port, the value of the bit in the child node mapping is updated.
   Sub-step 4: Update the tree building request counter. If the value of the network hop count field in the tree building request is Hop=0, the tree building request is a non-aggregated tree building request, and a value of the tree building request counter is increased by 1. If the value of the network hop count field in the tree building request is Hop>0, the tree building request is an aggregated tree building request, and a value of the tree building request counter is increased by the value AggLeaf=3 of the aggregated leaf node field in the tree building request.
   Sub-step 5: Compare a relationship between the value of the tree building request counter and a quantity of leaf nodes of the node, to determine whether tree building requests from all child nodes have been collected. First, a quantity of leaf nodes belonging to the node corresponding to the ToR is determined based on a type of the tree building request. If a value of the network hop count field is Hop=0, the tree building request is a non-aggregated tree building request, and the quantity of leaf nodes belonging to the node corresponding to the ToR is equal to the value of the aggregated leaf node field AggLeaf. If a value of the network hop count field is Hop>0, the tree building request is an aggregated tree building request, and the quantity of leaf nodes belonging to the node corresponding to the ToR is equal to the value of the aggregated leaf node field GlobalLeaf. Then, the relationship between the value of the tree building request counter and the quantity of leaf nodes belonging to the node corresponding to the ToR is compared. If the value is less than the quantity, another tree building request continues to be waited for, and a subsequent step is not immediately performed. If the value is greater than the quantity, a packet error occurs, the packet is discarded, tree building information is deleted, and a subsequent step is terminated. If the value is equal to the quantity, the current ToR has collected the tree building requests from all the child nodes, and a subsequent step continues to be performed.
   Sub-step 6: Compare a relationship between the value of the tree building request counter and the value of the global leaf node field GlobalLeaf in the tree building request, to determine whether the current ToR is a root node of the task tree. If the value of the tree building request counter is less than the value of the global leaf node field GlobalLeaf, the current ToR is not the root node, and continues to actively send the tree building request to a higher-layer network node device. If the value of the tree building request counter is greater than the value of the global leaf node field GlobalLeaf, a packet error occurs, the packet is discarded, the tree building information is deleted, and a subsequent step is terminated. If the value of the tree building request counter is equal to the value of the global leaf node field GlobalLeaf, the current ToR is the root node, the tree building succeeds, and tree building success information is sent to the child nodes based on a path port indicated by the child node mapping.

In this embodiment, the to-be-built logical tree is a single-layer tree, namely, a logical tree whose depth is 1. Therefore, AggLeaf=GlobalLeaf. After the ToR collects all the tree building requests, the tree building procedure ends. After receiving the tree building success information, the computing node device enters a data processing procedure in in-network computing, deletes the tree building information after computing is completed, and releases a resource of the network node device.

FIG. 13 is a diagram of building a dual-layer logical tree by using a spine switch (spine) as a root node according to Embodiment 2. A left side of FIG. 13 is a diagram of a structure of the to-be-built logical tree, and a right side shows a mapping relationship determined for network topology of network node devices and computing node devices based on the to-be-built logical tree. A ToR is a network node device, the spine is a network node device at a higher layer in a topology structure, and w1 to w6 represent six computing node devices. A tree building procedure is as follows:
Step 1: The computing node device initiates a tree building request. w1, w2, and w3 may obtain an address of a ToR 1 by using a configuration file, and w4, w5, and w6 may obtain an address of a ToR 2 by using a configuration file, to send tree building requests to the ToRs. In the tree building request packets sent by w1, w2, w3, w4, w5, and w6, a value of a network hop count field is Hop=0, a value of an aggregated leaf node field is AggLeaf=3, and a value of a global leaf node field is GlobalLeaf=6.
Step 2: The ToR 1 and the ToR 2 respectively receive the tree building requests, and separately perform processing. For a processing procedure, refer to step 2 in Embodiment 1, and details are not described herein again.
Step 3: The ToR 1 and the ToR 2 separately send a tree building request to the spine. A difference from Embodiment 1 lies in that after the ToR collects all the three tree building requests, because GlobalLeaf=6, the ToR determines that the ToR is not a root node, and therefore continues to send a tree building request to the spine at the higher layer. The ToR may obtain an address of the spine by using a configuration file or through out-of-band communication. Before sending the tree building request, the ToR further updates a value of a network hop count field in the tree building request to increase the value by 1. Therefore, in the tree building requests sent by the ToR 1 and the ToR 2 to the spine, the value of the network hop count field is Hop=1, a value of an aggregated leaf node field is AggLeaf=3, and a value of a global leaf node field is GlobalLeaf=6.
Step 4: The spine receives the tree building request, and processes the tree building request. A method for the spine to process the tree building request is the same as that for the ToR. For details, refer to specific descriptions in step 2 in Embodiment 1, and the details are not described herein again.
Step 5: The ToR 1 and the ToR 2 receive tree building success information sent by the spine, determine a port for receiving the tree building success information, record the port as a parent node mapping, and continue to transfer the tree building success information to the child nodes. The tree building procedure ends. After receiving the tree building success information, the computing node device enters a data processing procedure in in-network computing, deletes tree building information after computing is completed, and releases resources of the network node devices.

In conclusion, distributed dynamic tree building can be implemented by using the method for building a logical tree that is provided in embodiments of this application. In comparison with centralized static tree building, the impact of failures of a single node can be overcome, and a resource does not need to be reserved in advance, so that the reliability of building the logical tree by the distributed computing cluster can be improved, and the resource utilization of the network node device can be reduced.

The foregoing describes, with reference to FIG. 2 to FIG. 13, the embodiments of the method for building a logical tree that are provided in this application. The following describes, with reference to FIG. 14 to FIG. 17, embodiments of an apparatus for building a logical tree that are provided in this application.

FIG. 14 is a block diagram of a structure of a network node device 1400 for building a logical tree according to an embodiment of this application. As shown in FIG. 14, the network node device 1400 includes: an obtaining module 1410, an updating module 1420, and a determining module 1430.

Specifically, the obtaining module 1410 is configured to obtain a first tree building request initiated by a first computing node device in a plurality of computing node devices, where the first tree building request indicates a quantity of leaf nodes of each ancestor node in all ancestor nodes of a first leaf node in a first logical tree, the first logical tree is a logical tree that the first tree building request indicates a distributed computing cluster to build, and the first leaf node is a node that is in the first logical tree and that corresponds to the first computing node device.

Optionally, the first tree building request includes a network hop count field, and the network hop count field indicates a quantity of network node devices other than the first network node device on a forwarding path through which the first tree building request is forwarded from the first computing node device to the first network node device. The first tree building request further includes N leaf count fields, where N is a height of a root node in the first logical tree, and N is a positive integer. An n^{th} leaf count field in the N leaf count fields indicates a quantity of leaf nodes of an ancestor node that is of the first leaf node and whose height is n in the first logical tree, where n is a positive integer less than or equal to N.

Optionally, the obtaining module 1410 is specifically configured to receive the first tree building request sent by the first computing node device, where the first network node device is connected to the first computing node device.

Optionally, the obtaining module 1410 is specifically configured to receive the first tree building request sent by a third network node device, where the third network node device is a network node device that is in at least one network node device and that is connected to the first network node device, and the first tree building request is received by the third network node device from the first computing node device or a network node device connected to the third network node device.

Optionally, the obtaining module 1410 is specifically configured to obtain a first data packet, where the first data packet includes the first tree building request, and the first data packet is for transmission of data of an in-network computing task.

Specifically, the updating module 1420 is configured to update, based on the first tree building request, a value of a tree building request counter that is in a tree building information table and that corresponds to the first logical tree, where the tree building request counter indicates a quantity of tree building requests that have been received by the first network node device and that are initiated by different computing node devices in the plurality of computing node devices.

Optionally, the updating module 1420 is specifically configured to: when a value of the network hop count field in the first tree building request is equal to 0, increase the value of the tree building request counter by 1; or when a value of the network hop count field in the first tree building request is equal to M, and M is a positive integer less than N, increase the value of the tree building request counter by a value of an M^{th} leaf count field in the N leaf count fields in the first tree building request.

Optionally, the tree building information table further includes a network hop count that corresponds to the tree building request counter, and the network hop count indicates values of network hop count fields in the tree building requests indicated by the tree building request counter that have been received by the first network node device and that are initiated by the different computing node devices in the plurality of computing node devices. The updating module 1420 is specifically configured to update the value of the tree building request counter when the value of the network hop count field in the first tree building request is equal to a value of the network hop count.

Optionally, the tree building information table further includes a child node mapping corresponding to the tree building request counter, and the child node mapping indicates a port in at least one port of the first network node device for receiving the tree building requests indicated by the tree building request counter that have been received by the first network node device and that are initiated by the different computing node devices in the plurality of computing node devices. The updating module 1420 is specifically configured to: determine a first port through which the first network node device receives the first tree building request; and when the child node mapping indicates that the tree building request has not been received through the first port, update the value of the tree building request counter and the child node mapping.

Optionally, the first tree building request further includes a task identifier field, the task identifier field indicates a first in-network computing task to be executed by using the first logical tree for in-network computing, the tree building information table further includes a task identifier corresponding to the tree building request counter, and the task identifier indicates values of task identifier fields in the tree building requests indicated by the tree building request counter that have been received by the first network node device and that are initiated by the different computing node devices in the plurality of computing node devices. The updating module 1420 is specifically configured to update the value of the tree building request counter when a value of the task identifier field in the first tree building request is equal to a value of the task identifier.

Specifically, the determining module 1430 is configured to determine a tree building result based on the tree building request counter and a first threshold, where the first threshold is a quantity of leaf nodes of an ancestor node that is of the first leaf node and that corresponds to the first network node device.

Optionally, the first threshold is equal to a value of a (K+1)^{th} leaf count field in the N leaf count fields in the first tree building request, where K is the value of the network hop count field in the first tree building request, and K is a positive integer less than N. The determining module 1430 is specifically configured to: when a new value of the tree building request counter is equal to the first threshold, determine that building of the first logical tree has completed at the node corresponding to the first network node device; when a new value of the tree building request counter is greater than the first threshold, delete tree building information corresponding to the first tree building request; or when a new value of the tree building request counter is less than the first threshold, wait to receive another tree building request, to determine the tree building result.

Optionally, when the new value of the tree building request counter is equal to the first threshold, the determining module 1430 is further configured to: when the new value of the tree building request counter is equal to a second threshold, forward first tree building success information on the path for forwarding the first tree building request to the first network node device, where the second threshold is a total quantity of leaf nodes in the first logical tree, and the second threshold is equal to a value of an N^{th} leaf count field in the N leaf count fields in the first tree building request; when the new value of the tree building request counter is greater than a second threshold, delete the tree building information corresponding to the first tree building request; or when the new value of the tree building request counter is less than the first threshold, determine the tree building result based on a tree building result of a second network node device, where the second network node device is a network node device connected to the first network node device in the at least one network node device.

Optionally, the determining module 1430 is specifically configured to: increase the value of the network hop count field in the first tree building request by 1, to update the first tree building request; send an updated first tree building request to the second network node device; receive second tree building success information sent by the second network node device; and forward the second tree building success information on the path for forwarding the first tree building request to the first network node device.

Optionally, after the second tree building success information sent by the second network node device is received, the determining module 1430 is further configured to add, to the tree building information table, a parent node mapping corresponding to the tree building request counter, where the parent node mapping indicates information about a port through which the first network node device is connected to the second network node device.

Optionally, the first tree building request is initiated by the first computing node device when the first in-network computing task starts. The determining module 1430 is further configured to: after the first in-network computing task ends, delete, for the first network node device, tree building information that is in the tree building information table and that corresponds to the task identifier indicating the first in-network computing task.

The foregoing modules may be implemented by software, or may be implemented by hardware. For example, the following uses the determining module 1430 as an example to describe an implementation of the determining module 1430. Similarly, for implementations of the obtaining module 1410 and the updating module 1420, refer to the implementation of the determining module 1430.

The module is used as an example of a software functional unit, and the determining module 1430 may include code that is run on a computing instance. The computing instance may include at least one of a physical host (a computing device), a virtual machine, and a container. Further, there may be one or more computing instances. For example, the determining module 1430 may include code that is run on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed in a same virtual private cloud (virtual private cloud, VPC), or may be distributed in a plurality of VPCs. Generally, one VPC is arranged in one region. For cross-area communication between two VPCs in a same region and between VPCs in different regions, a communication gateway needs to be arranged in each of the VPCs, and interconnection between the VPCs is implemented through the communication gateway.

The module is used as an example of a hardware functional unit, and the determining module 1430 may include at least one computing device, for example, a server. Alternatively, the determining module 1430 may be a device implemented by an application-specific integrated circuit (application-specific integrated circuit, ASIC) or a programmable logic device (programmable logic device, PLD), or the like. The PLD may be implemented by a complex programmable logic device (complex programmable logic device, CPLD), a field-programmable gate array (field-programmable gate array, FPGA), generic array logic (generic array logic, GAL), or any combination thereof.

The plurality of computing devices included in the determining module 1430 may be distributed in a same region, or may be distributed in different regions. The plurality of computing devices included in the determining module 1430 may be distributed in a same AZ, or may be distributed in different AZs. Similarly, the plurality of computing devices included in the determining module 1430 may be distributed in a same VPC, or may be distributed in a plurality of VPCs. The plurality of computing devices may be any combination of computing devices such as a server, an ASIC, a PLD, a CPLD, an FPGA, and a GAL.

It should be noted that, in other embodiments, the obtaining module 1410, the updating module 1420, and the determining module 1430 may be respectively configured to perform any step in the foregoing method for building a logical tree. Steps implemented by the obtaining module 1410, the updating module 1420, and the determining module 1430 may be specified as required. The obtaining module 1410, the updating module 1420, and the determining module 1430 respectively implement different steps in the foregoing method for building a logical tree, to implement all functions of the network node device 1400.

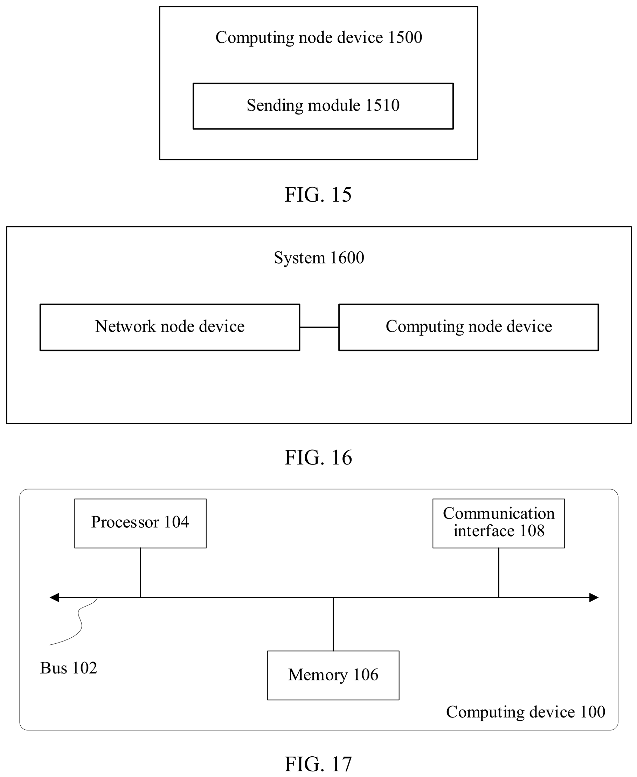

FIG. 15 is a block diagram of a structure of a computing node device 1500 for building a logical tree according to an embodiment of this application. As shown in FIG. 15, the computing node device 1500 includes a sending module 1510.

Specifically, the sending module 1510 is configured to send a first tree building request to a fourth network node device, where the first tree building request indicates a quantity of leaf nodes of each ancestor node in all ancestor nodes of a first leaf node in a first logical tree, the first logical tree is a logical tree that the first tree building request indicates a distributed computing cluster to build, the first leaf node is a node that is in the first logical tree and that corresponds to the first computing node device, and the fourth network node device is a network node device that is in at least one network node device and that is connected to the first computing node device.

Optionally, the first tree building request includes a network hop count field, the network hop count field indicates a quantity of network node devices that the first tree building request has passed through on a forwarding path, and a value of the network hop count field in the first tree building request sent by the first computing node device to the fourth network node device is 0. The first tree building request further includes N leaf count fields, where N is a height of a root node in the first logical tree, and N is a positive integer. An n^{th} leaf count field in the N leaf count fields indicates a quantity of leaf nodes of an ancestor node that is of the first leaf node and whose height is n in the first logical tree, where n is a positive integer less than or equal to N.

Optionally, the first tree building request includes a task identifier field, and the task identifier field indicates a first in-network computing task to be executed by using the first logical tree for in-network computing.

Optionally, the sending module 1510 is specifically configured to send the first tree building request to the fourth network node device when the first in-network computing task starts.

Optionally, the sending module 1510 is specifically configured to send a first data packet to the fourth network node device, where the first data packet includes the first tree building request, and the first data packet is for transmission of data of an in-network computing task.

The sending module 1510 may also be implemented by software, or may be implemented by hardware.

FIG. 16 is a block diagram of a structure of a system 1600 for building a logical tree according to an embodiment of this application. As shown in FIG. 16, the system includes at least one network node device and a plurality of computing node devices. The network node device included in the system may be, for example, the network node device 1400 shown in FIG. 14, and can implement the method for building a logical tree that is provided in embodiments of this application. The computing node device included in the system may be, for example, the computing node device 1500 shown in FIG. 15, and can implement the method for building a logical tree that is provided in embodiments of this application.

This application further provides a computing device 100. As shown in FIG. 17, the computing device 100 includes a bus 102, a processor 104, a memory 106, and a communication interface 108. The processor 104, the memory 106, and the communication interface 108 communicate with each other through the bus 102. The computing device 100 may be a server or a terminal device. It should be understood that quantities of processors and memories in the computing device 100 are not limited in this application.

The bus 102 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, the bus is represented by using only one line in FIG. 17, but it does not indicate that there is only one bus or one type of bus. The bus 102 may include a path for transmitting information between components (for example, the memory 106, the processor 104, and the communication interface 108) of the computing device 100.

The processor 104 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 106 may include a volatile memory (volatile memory), for example, a random access memory (random access memory, RAM). The memory 106 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 106 stores executable program code. The processor 104 executes the executable program code to separately implement functions of the obtaining module, the updating module, and the determining module above or implement a function of the sending module above, to implement the foregoing method for building a logical tree. In other words, the memory 106 stores instructions for performing the foregoing method for building a logical tree.

The communication interface 108 uses, for example but not limited to, a command distribution module such as a network interface card or a transceiver, to implement communication between the computing device 100 and another device or a communication network.

An embodiment of this application further provides a chip. The chip includes a processor and a data interface. The processor reads, through the data interface, instructions stored in a memory, to perform the foregoing method for building a logical tree.

An embodiment of this application further provides a computer program product including instructions. The computer program product may be software or a program product that includes the instructions and that can run on a computing device or be stored in any usable medium. When the computer program product runs on at least one computing device, the at least one computing device is enabled to perform the foregoing method for building a logical tree.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the foregoing managed technical features that the instructions instruct the computing device to perform may be randomly combined. For brevity of description, not all possible combinations of the technical features in the foregoing embodiments have been described, and any combination of the technical features shall be considered to be within the scope disclosed in this specification, provided that there is no contradiction between the combinations of the technical features.

The foregoing embodiments are merely intended to describe the technical solutions of this application, but not intended to limit this application. Although this application is described in detail with reference to the foregoing embodiments, a person of ordinary skill in the art should understand that modifications can still be made to the technical solutions described in the foregoing embodiments or equivalent replacements can be made to some technical features thereof, without departing from the protection scope of the technical solutions in embodiments of this application.

## Claims

1. A method for building a logical tree, wherein the method is applied to a first network node device in a distributed computing cluster, the distributed computing cluster comprises a plurality of computing node devices and at least one network node device, the first network node device is one of the at least one network node device, and the method comprises:
obtaining, by the first network node device, a first tree building request initiated by a first computing node device in the plurality of computing node devices, wherein the first tree building request indicates a quantity of leaf nodes of each ancestor node in all ancestor nodes of a first leaf node in a first logical tree, the first logical tree is a logical tree that the first tree building request indicates the distributed computing cluster to build, and the first leaf node is a node that is in the first logical tree and that corresponds to the first computing node device;
updating, by the first network node device based on the first tree building request, a value of a tree building request counter that is in a tree building information table and that corresponds to the first logical tree, wherein the tree building request counter indicates a quantity of tree building requests that have been received by the first network node device and that are initiated by different computing node devices in the plurality of computing node devices; and
determining, by the first network node device, a tree building result based on the tree building request counter and a first threshold, wherein the first threshold is a quantity of leaf nodes of an ancestor node that is of the first leaf node and that corresponds to the first network node device.

2. The method according to claim 1, wherein the first tree building request comprises a network hop count field, and the network hop count field indicates a quantity of network node devices other than the first network node device on a forwarding path through which the first tree building request is forwarded from the first computing node device to the first network node device; and
the first tree building request further comprises N leaf count fields, wherein N is a height of a root node in the first logical tree, and N is a positive integer; and an n^{th} leaf count field in the N leaf count fields indicates a quantity of leaf nodes of an ancestor node that is of the first leaf node and whose height is n in the first logical tree, wherein n is a positive integer less than or equal to N.

3. The method according to claim 2, wherein the updating, based on the first tree building request, the value of the tree building request counter that is in the tree building information table and that corresponds to the first logical tree comprises:
when a value of the network hop count field in the first tree building request is equal to 0, increasing the value of the tree building request counter by 1; or
when a value of the network hop count field in the first tree building request is equal to M, and M is a positive integer less than N, increasing the value of the tree building request counter by a value of an M^{th} leaf count field in the N leaf count fields in the first tree building request.

4. The method according to claim 2 or 3, wherein the tree building information table further comprises a network hop count that corresponds to the tree building request counter, and the network hop count indicates values of network hop count fields in the tree building requests indicated by the tree building request counter that have been received by the first network node device and that are initiated by the different computing node devices in the plurality of computing node devices; and the updating, based on the first tree building request, the value of the tree building request counter in the tree building information table comprises:
updating the value of the tree building request counter when the value of the network hop count field in the first tree building request is equal to a value of the network hop count.

5. The method according to any one of claims 2 to 4, wherein the first threshold is equal to a value of a (K+1)^{th} leaf count field in the N leaf count fields in the first tree building request, wherein K is the value of the network hop count field in the first tree building request, and K is a positive integer less than N; and the determining the tree building result based on the tree building request counter and the first threshold comprises:
when a new value of the tree building request counter is equal to the first threshold, determining that building of the first logical tree has completed at the node corresponding to the first network node device;
when a new value of the tree building request counter is greater than the first threshold, deleting tree building information corresponding to the first tree building request; or
when a new value of the tree building request counter is less than the first threshold, waiting to receive another tree building request, to determine the tree building result.

6. The method according to claim 5, wherein when the new value of the tree building request counter is equal to the first threshold, the method further comprises:
when the new value of the tree building request counter is equal to a second threshold, forwarding first tree building success information based on the path for forwarding the first tree building request to the first network node device, wherein the second threshold is a total quantity of leaf nodes in the first logical tree, and the second threshold is equal to a value of an N^{th} leaf count field in the N leaf count fields in the first tree building request;
when the new value of the tree building request counter is greater than the second threshold, deleting the tree building information corresponding to the first tree building request; or
when the new value of the tree building request counter is less than the first threshold, determining the tree building result based on a tree building result of a second network node device, wherein the second network node device is a network node device connected to the first network node device in the at least one network node device.

7. The method according to claim 6, wherein the determining the tree building result based on the tree building result of the second network node device comprises:
increasing the value of the network hop count field in the first tree building request by 1, to update the first tree building request;
sending an updated first tree building request to the second network node device;
receiving second tree building success information sent by the second network node device; and
forwarding the second tree building success information based on the path for forwarding the first tree building request to the first network node device.

8. The method according to claim 7, wherein after the receiving the second tree building success information sent by the second network node device, the method further comprises:
adding, to the tree building information table, a parent node mapping corresponding to the tree building request counter, wherein the parent node mapping indicates information about a port through which the first network node device is connected to the second network node device.

9. The method according to any one of claims 1 to 8, wherein the tree building information table further comprises a child node mapping corresponding to the tree building request counter, and the child node mapping indicates a port in at least one port of the first network node device for receiving the tree building requests indicated by the tree building request counter that have been received by the first network node device and that are initiated by the different computing node devices in the plurality of computing node devices; and the updating, based on the first tree building request, the value of the tree building request counter in the tree building information table comprises:
determining a first port through which the first network node device receives the first tree building request; and
when the child node mapping indicates that the tree building request has not been received through the first port, updating the value of the tree building request counter and the child node mapping.

10. The method according to any one of claims 1 to 9, wherein the first tree building request further comprises a task identifier field, the task identifier field indicates a first in-network computing task to be executed by using the first logical tree for in-network computing, the tree building information table further comprises a task identifier corresponding to the tree building request counter, and the task identifier indicates values of task identifier fields in the tree building requests indicated by the tree building request counter that have been received by the first network node device and that are initiated by the different computing node devices in the plurality of computing node devices; and the updating, based on the first tree building request, the value of the tree building request counter in the tree building information table comprises:
updating the value of the tree building request counter when a value of the task identifier field in the first tree building request is equal to a value of the task identifier.

11. The method according to claim 10, wherein the first tree building request is initiated by the first computing node device when the first in-network computing task starts, and the method further comprises:
after the first in-network computing task ends, deleting, by the first network node device, tree building information that is in the tree building information table and that corresponds to the task identifier indicating the first in-network computing task.

12. The method according to any one of claims 1 to 11, wherein the obtaining the first tree building request initiated by the first computing node device in the plurality of computing node devices comprises:
receiving the first tree building request sent by the first computing node device, wherein the first network node device is connected to the first computing node device.

13. The method according to any one of claims 1 to 11, wherein the obtaining the first tree building request initiated by the first computing node device in the plurality of computing node devices comprises:
receiving the first tree building request sent by a third network node device, wherein the third network node device is a network node device connected to the first network node device in the at least one network node device, and the first tree building request is received by the third network node device from the first computing node device or a network node device connected to the third network node device.

14. The method according to any one of claims 1 to 13, wherein the obtaining the first tree building request initiated by the first computing node device in the plurality of computing node devices comprises:
obtaining a first data packet, wherein the first data packet comprises the first tree building request, and the first data packet is for transmission of data of an in-network computing task.

15. A method for building a logical tree, wherein the method is applied to a first computing node device in a distributed computing cluster, the distributed computing cluster comprises a plurality of computing node devices and at least one network node device, the first computing node device is one of the plurality of computing node devices, and the method comprises:
sending, by the first computing node device, a first tree building request to a fourth network node device, wherein the first tree building request indicates a quantity of leaf nodes of each ancestor node in all ancestor nodes of a first leaf node in a first logical tree, the first logical tree is a logical tree that the first tree building request indicates the distributed computing cluster to build, the first leaf node is a node that is in the first logical tree and that corresponds to the first computing node device, and the fourth network node device is a network node device connected to the first computing node device in the at least one network node device.

16. The method according to claim 15, wherein the first tree building request comprises a network hop count field, the network hop count field indicates a quantity of network node devices that the first tree building request has passed through on a forwarding path, and a value of the network hop count field in the first tree building request sent by the first computing node device to the fourth network node device is 0; and
the first tree building request further comprises N leaf count fields, wherein N is a height of a root node in the first logical tree, and N is a positive integer; and an n^{th} leaf count field in the N leaf count fields indicates a quantity of leaf nodes of an ancestor node that is of the first leaf node and whose height is n in the first logical tree, wherein n is a positive integer less than or equal to N.

17. The method according to claim 15 or 16, wherein the first tree building request comprises a task identifier field, and the task identifier field indicates a first in-network computing task to be executed by using the first logical tree for in-network computing.

18. The method according to claim 17, wherein the sending the first tree building request to the fourth network node device comprises:
sending the first tree building request to the fourth network node device when the first in-network computing task starts.

19. The method according to any one of claims 15 to 18, wherein the sending the first tree building request to the fourth network node device comprises:
sending a first data packet to the fourth network node device, wherein the first data packet comprises the first tree building request, and the first data packet is for transmission of data of an in-network computing task.

20. A network node device for building a logical tree, wherein the network node device is a first network node device in a distributed computing cluster, the distributed computing cluster comprises a plurality of computing node devices and at least one network node device, the first network node device is one of the at least one network node device, and the network node device comprises:
an obtaining module, configured to obtain a first tree building request initiated by a first computing node device in the plurality of computing node devices, wherein the first tree building request indicates a quantity of leaf nodes of each ancestor node in all ancestor nodes of a first leaf node in a first logical tree, the first logical tree is a logical tree that the first tree building request indicates the distributed computing cluster to build, and the first leaf node is a node that is in the first logical tree and that corresponds to the first computing node device;
an updating module, configured to update, based on the first tree building request, a value of a tree building request counter that is in a tree building information table and that corresponds to the first logical tree, wherein the tree building request counter indicates a quantity of tree building requests that have been received by the first network node device and that are initiated by different computing node devices in the plurality of computing node devices; and
a determining module, configured to determine a tree building result based on the tree building request counter and a first threshold, wherein the first threshold is a quantity of leaf nodes of an ancestor node that is of the first leaf node and that corresponds to the first network node device.

21. The network node device according to claim 20, wherein the first tree building request comprises a network hop count field, and the network hop count field indicates a quantity of network node devices other than the first network node device on a forwarding path through which the first tree building request is forwarded from the first computing node device to the first network node device; and
the first tree building request further comprises N leaf count fields, wherein N is a height of a root node in the first logical tree, and N is a positive integer; and an n^{th} leaf count field in the N leaf count fields indicates a quantity of leaf nodes of an ancestor node that is of the first leaf node and whose height is n in the first logical tree, wherein n is a positive integer less than or equal to N.

22. The network node device according to claim 21, wherein the updating module is configured to:
when a value of the network hop count field in the first tree building request is equal to 0, increase the value of the tree building request counter by 1; or
when a value of the network hop count field in the first tree building request is equal to M, and M is a positive integer less than N, increase the value of the tree building request counter by a value of an M^{th} leaf count field in the N leaf count fields in the first tree building request.

23. The network node device according to claim 21 or 22, wherein the tree building information table further comprises a network hop count that corresponds to the tree building request counter, and the network hop count indicates values of network hop count fields in the tree building requests indicated by the tree building request counter that have been received by the first network node device and that are initiated by the different computing node devices in the plurality of computing node devices; and the updating module is configured to:
update the value of the tree building request counter when the value of the network hop count field in the first tree building request is equal to a value of the network hop count.

24. The network node device according to any one of claims 21 to 23, wherein the first threshold is equal to a value of a (K+1)^{th} leaf count field in the N leaf count fields in the first tree building request, wherein K is the value of the network hop count field in the first tree building request, and K is a positive integer less than N; and the determining module is configured to:
when a new value of the tree building request counter is equal to the first threshold, determine that building of the first logical tree has completed at the node corresponding to the first network node device;
when a new value of the tree building request counter is greater than the first threshold, delete tree building information corresponding to the first tree building request; or
when a new value of the tree building request counter is less than the first threshold, wait to receive another tree building request, to determine the tree building result.

25. The network node device according to claim 24, wherein when the new value of the tree building request counter is equal to the first threshold, the determining module is further configured to:
when the new value of the tree building request counter is equal to a second threshold, forward first tree building success information based on the path for forwarding the first tree building request to the first network node device, wherein the second threshold is a total quantity of leaf nodes in the first logical tree, and the second threshold is equal to a value of an N^{th} leaf count field in the N leaf count fields in the first tree building request;
when the new value of the tree building request counter is greater than the second threshold, delete the tree building information corresponding to the first tree building request; or
when the new value of the tree building request counter is less than the first threshold, determine the tree building result based on a tree building result of a second network node device, wherein the second network node device is a network node device connected to the first network node device in the at least one network node device.

26. The network node device according to claim 25, wherein the determining module is configured to:
increase the value of the network hop count field in the first tree building request by 1, to update the first tree building request;
send an updated first tree building request to the second network node device;
receive second tree building success information sent by the second network node device; and
forward the second tree building success information based on the path for forwarding the first tree building request to the first network node device.

27. The network node device according to claim 26, wherein after the second tree building success information sent by the second network node device is received, the determining module is further configured to:
add, to the tree building information table, a parent node mapping corresponding to the tree building request counter, wherein the parent node mapping indicates information about a port through which the first network node device is connected to the second network node device.

28. The network node device according to any one of claims 20 to 27, wherein the tree building information table further comprises a child node mapping corresponding to the tree building request counter, and the child node mapping indicates a port in at least one port of the first network node device for receiving the tree building requests indicated by the tree building request counter that have been received by the first network node device and that are initiated by the different computing node devices in the plurality of computing node devices; and the updating module is configured to:
determine a first port through which the first network node device receives the first tree building request; and
when the child node mapping indicates that the tree building request has not been received through the first port, update the value of the tree building request counter and the child node mapping.

29. The network node device according to any one of claims 20 to 28, wherein the first tree building request further comprises a task identifier field, the task identifier field indicates a first in-network computing task to be executed by using the first logical tree for in-network computing, the tree building information table further comprises a task identifier corresponding to the tree building request counter, and the task identifier indicates values of task identifier fields in the tree building requests indicated by the tree building request counter that have been received by the first network node device and that are initiated by the different computing node devices in the plurality of computing node devices; and the updating module is configured to:
update the value of the tree building request counter when a value of the task identifier field in the first tree building request is equal to a value of the task identifier.

30. The network node device according to claim 29, wherein the first tree building request is initiated by the first computing node device when the first in-network computing task starts, and the determining module is further configured to:
after the first in-network computing task ends, delete, for the first network node device, tree building information that is in the tree building information table and that corresponds to the task identifier indicating the first in-network computing task.

31. The network node device according to any one of claims 20 to 30, wherein the obtaining module is configured to:
receive the first tree building request sent by the first computing node device, wherein the first network node device is connected to the first computing node device.

32. The network node device according to any one of claims 20 to 30, wherein the obtaining module is configured to:
receive the first tree building request sent by a third network node device, wherein the third network node device is a network node device connected to the first network node device in the at least one network node device, and the first tree building request is received by the third network node device from the first computing node device or a network node device connected to the third network node device.

33. The network node device according to any one of claims 20 to 32, wherein the obtaining module is configured to:
obtain a first data packet, wherein the first data packet comprises the first tree building request, and the first data packet is for transmission of data of an in-network computing task.

34. A computing node device for building a logical tree, wherein the computing node device is a first computing node device in a distributed computing cluster, the distributed computing cluster comprises a plurality of computing node devices and at least one network node device, the first computing node device is one of the plurality of computing node devices, and the computing node device comprises:
a sending module, configured to send a first tree building request to a fourth network node device, wherein the first tree building request indicates a quantity of leaf nodes of each ancestor node in all ancestor nodes of a first leaf node in a first logical tree, the first logical tree is a logical tree that the first tree building request indicates the distributed computing cluster to build, the first leaf node is a node that is in the first logical tree and that corresponds to the first computing node device, and the fourth network node device is a network node device connected to the first computing node device in the at least one network node device.

35. The computing node device according to claim 34, wherein the first tree building request comprises a network hop count field, the network hop count field indicates a quantity of network node devices that the first tree building request has passed through on a forwarding path, and a value of the network hop count field in the first tree building request sent by the first computing node device to the fourth network node device is 0; and
the first tree building request further comprises N leaf count fields, wherein N is a height of a root node in the first logical tree, and N is a positive integer; and an n^{th} leaf count field in the N leaf count fields indicates a quantity of leaf nodes of an ancestor node that is of the first leaf node and whose height is n in the first logical tree, wherein n is a positive integer less than or equal to N.

36. The computing node device according to claim 34 or 35, wherein the first tree building request comprises a task identifier field, and the task identifier field indicates a first in-network computing task to be executed by using the first logical tree for in-network computing.

37. The computing node device according to claim 36, wherein the sending module is configured to:
send the first tree building request to the fourth network node device when the first in-network computing task starts.

38. The computing node device according to any one of claims 34 to 37, wherein the sending module is configured to:
send a first data packet to the fourth network node device, wherein the first data packet comprises the first tree building request, and the first data packet is for transmission of data of an in-network computing task.

39. A system for building a logical tree, comprising at least one network node device and a plurality of computing node devices, wherein the at least one network node device is configured to perform the method according to any one of claims 1 to 14, and the plurality of computing node devices are configured to perform the method according to any one of claims 15 to 19.

40. A computing device, comprising a processor and a memory, wherein the processor is configured to execute instructions stored in the memory, to enable the computing device to perform the method according to any one of claims 1 to 14 or perform the method according to any one of claims 15 to 19.

41. A computer-readable storage medium, comprising computer program instructions, wherein when the computer program instructions are executed by a computing device, the computing device is enabled to perform the method according to any one of claims 1 to 14 or perform the method according to any one of claims 15 to 19.
